# EUROPEAN PATENT SPECIFICATION

(11) **EP 3 846 187 B1**
(45) Date of publication and mention of the grant of the patent: **22.02.2023**
(21) Application number: 19855268.9
(22) Date of filing: 07.03.2019
(51) Int. Cl.: H01F 38/08, H01F 27/24

(54) **TRANSFORMER AND POWER CONVERSION DEVICE**
TRANSFORMATOR UND LEISTUNGSWANDLUNGSVORRICHTUNG
TRANSFORMATEUR ET DISPOSITIF DE CONVERSION DE PUISSANCE

(30) Priority: 28.08.2018 JP 2018159680
(43) Date of publication of application: 07.07.2021
(73) Proprietor: OMRON Corporation, Shiokoji-dori, Shimogyo-ku, Kyoto-shi Kyoto 600-8530 (JP)
(72) Inventor: ISHIBASHI, Hiroki, Kyoto-shi, Kyoto 600-8530 (JP); NAGAOKA, Shingo, Kyoto-shi, Kyoto 600-8530 (JP); ZAITSU, Toshiyuki, Kyoto-shi, Kyoto 600-8530 (JP); UEMATSU, Takeshi, Kyoto-shi, Kyoto 600-8530 (JP)
(74) Representative: HGF
(86) International application number: PCT/JP2019/009099
(87) International publication number: WO 2020/044620

(56) References cited:
- GB-A- 580 600
- JP-A- S5 324 530
- JP-A- H10 163 046
- JP-A- S54 120 828
- JP-A- S63 136 608
- JP-A- 2000 340 441
- JP-A- 2001 203 112
- JP-A- 2016 219 540
- KATS A ET AL: "APPLICATION OF INTEGRATED MAGNETICS IN RESONANT CONVERTERS", APEC '97. TWELTH ANNUAL APPLIED POWER ELECTRONICS CONFERENCE AND EXPOSITION. ATLANTA, FEB. 23 - 27, 1997; [APEC. ANNUAL APPLIED POWER ELECTRONICS CONFERENCE AND EXPOSITION], NEW YORK, IEEE, US, vol. CONF. 12, 23 February 1997 (1997-02-23), pages 925-930, XP000731048, ISBN: 978-0-7803-3705-3

## Description

### TECHNICAL FIELD

The present disclosure relates to a transformer and a power converter apparatus.

### BACKGROUND ART

In order to enhance performance of power conversion of a transformer, it is known to increase the transformer's leakage inductance. The leakage inductance occurs due to a magnetic flux which intersects only one of a primary winding and a secondary winding of the transformer. Conventionally, in order to generate such magnetic flux, for example, transformers are known, each of which is provided with a main core, and also provided with a bypass core(s) as a flux path(s) for guiding a magnetic flux leaking from the main core, as disclosed in Patent Documents 1 and 2.

Patent Document 1 discloses a power transformer in which electrically-insulated magnetic gap pieces are inserted between a primary winding and a secondary winding of the transformer, and these gap pieces cool the windings, and increase a leakage magnetic flux between the windings for inductance effect.

Patent Document 2 discloses a leakage magnetic flux transformer provided with a main core, a first winding, a second winding, and one or more path cores. The main core is a first magnetic body forming a closed magnetic circuit, and has outer legs and an inner leg. The first winding is wound around the inner leg along a longitudinal direction of the inner leg as an axis. The second winding is wound around the first winding along the longitudinal direction of the inner leg as an axis. The path core is a second magnetic body penetrating through, along an axial direction, a part of a region between an innermost portion of the first winding and an outermost portion of the second winding, the second magnetic body extending to such positions that a magnetic flux leaking from both ends of the second magnetic body and passing through the first winding is reduced to a threshold or less.

### CITATION LIST

### PATENT DOCUMENTS

PATENT DOCUMENT 1: Japanese Patent Laid-open Publication No. JP S53-024530 A
PATENT DOCUMENT 2: Japanese Patent Laid-open Publication No. JP 2016-219540 A

### SUMMARY OF INVENTION

### TECHNICAL PROBLEM

The characteristics of a power converter apparatus provided with a transformer, such as a gain, change due to magnetizing inductance and leakage inductance. In order to satisfy a desired circuit constant while achieving a high power density, it is required to adjust the magnetizing inductance while achieving large leakage inductance. The magnetizing inductance is adjusted by forming a gap in a core. However, by forming the gap in the core, a leakage magnetic flux occurs. If the leakage magnetic flux intersects a winding, then a loss occurs. Accordingly, it is required to provide a transformer capable of adjusting the magnetizing inductance and having large leakage inductance, without increasing the loss.

An object of the present disclosure is to provide a transformer capable of adjusting magnetizing inductance and increasing leakage inductance, without increasing a loss. Another object of the present disclosure is to provide a power converter apparatus provided with such a transformer.

### SOLUTION TO PROBLEM

In order to solve the above-described problems, a transformer and a power converter apparatus according to aspects of the present disclosure are configured as follows.

A transformer according to an aspect of the present disclosure is provided with: a main core, a first winding, a second winding, at least one first bypass core, a third winding, at least one second bypass core, a fourth winding, and at least one gap. The main core is shaped as a loop. The first winding is wound around the main core in a first section of the loop of the main core. The second winding is wound around the main core in a second section of the loop of the main core, the second section being separated from the first section. The at least one first bypass core is provided along the first section of the main core and outside the first winding. The third winding is wound around the main core and the first bypass core in the first section of the main core. The at least one second bypass core is provided along the second section of the main core and outside the second winding. The fourth winding is wound around the main core and the second bypass core in the second section of the main core. The at least one gap is formed in the main core so as to intersect the loop of the main core, at a position separated from both the first and second sections of the main core.

In this case, the "first winding" and the "second winding" may be used as a primary winding of the transformer, and the "third winding" and the "fourth winding" may be used as a secondary winding of the transformer. Alternatively, the "first winding" and the "second winding" may be used as a secondary winding of the transformer, and the "third winding" and the "fourth winding" may be used as a primary winding of the transformer.

According to the transformer of the aspect of the present disclosure, since the bypass cores are provided, the magnetic fluxes occur, which originate from the main core and return to the main core again through the bypass cores (that is, the magnetic fluxes passing through the bypass cores occur). The magnetic fluxes passing through the bypass cores do not intersect the third and fourth windings, but only intersect the first and second windings. It is possible to generate large leakage inductance by generating the magnetic fluxes passing through the bypass cores. In addition, the transformer according to the aspect of the present disclosure is capable of preventing the leakage magnetic fluxes from intersecting the first to fourth windings by generating the leakage magnetic fluxes in the gaps formed at the positions separated from the windings, and capable of adjusting magnetizing inductance while preventing an increase in a loss due to intersection of the leakage magnetic fluxes and the windings. As described above, the transformer according to the aspect of the present disclosure is capable of increasing the leakage inductance without increasing the loss.

According to the transformer of the aspect of the present disclosure, the first bypass core may extend over a length longer than a length of the first section. In addition, the second bypass core may extend over a length longer than a length of the second section.

According to the transformer of the aspect of the present disclosure, it is possible to change an amount of the magnetic fluxes passing through the first and second bypass cores, and accordingly, change the leakage inductance generated by the magnetic fluxes passing through the bypass cores, in accordance with the length of the bypass cores.

According to the transformer of the aspect of the present disclosure, the first and second bypass cores may extend along the main core, and may be bent toward the main core, or along the main core, at both ends of each of the first and second bypass cores.

According to the transformer of the aspect of the present disclosure, since both ends of each of the first and second bypass cores are bent, it is possible to increase an amount of the magnetic fluxes passing through the bypass cores, and accordingly, increase the leakage inductance generated by the magnetic fluxes passing through the bypass cores, than the case where both ends of the bypass cores are not bent.

The transformer according to the aspect of the present disclosure may be provided with a plurality of first bypass cores and a plurality of second bypass cores.

According to the transformer of the aspect of the present disclosure, it is possible to increase an amount of the magnetic fluxes passing through the bypass cores, and accordingly, increase the leakage inductance generated by the magnetic fluxes passing through the bypass cores, than the case where only one first bypass core and one second bypass core are provided.

According to the transformer of the aspect of the present disclosure, the first and third windings may be wound so as to contact a surface of the main core at each of turns, and to be alternately arranged on the surface of the main core. In addition, the second and fourth windings may be wound so as to contact the surface of the main core at each of turns, and to be alternately arranged on the surface of the main core.

According to the transformer of the aspect of the present disclosure, since the primary winding and the secondary winding are wound so as to be alternately arranged on the surface of the main core, it is possible to reduce a loss due to the proximity effect of the windings than the case where the windings are not wound in such a manner.

The transformer according to the aspect of the present disclosure may be provided with: at least one gap formed in the main core so as to intersect the loop of the main core, in a third section of the loop of the main core between one end of the first section and one end of the second section; and at least one gap formed in the main core so as to intersect the loop of the main core, in a fourth section of the loop of the main core between another end of the first section and another end of the second section.

According to the transformer of the aspect of the present disclosure, it is possible to adjust the magnetizing inductance while preventing an increase in a loss due to intersection of the leakage magnetic fluxes and the first to fourth windings, by generating the leakage magnetic fluxes in the gaps formed at the positions separated from the windings.

The transformer according to the aspect of the present disclosure may be provided with a plurality of gaps formed in the main core so as to intersect the loop of the main core, in at least one of the third and fourth sections.

According to the transformer of the aspect of the present disclosure, the more the number of gaps increases, the smaller the areas of regions from which the leakage magnetic fluxes leak are, and accordingly, the leakage magnetic fluxes are less likely to intersect the windings.

The transformer according to the aspect of the present disclosure may be provided with first to fourth terminals. In addition, the first and second windings may be connected in series between the first and second terminals, so that the first and second windings generate magnetic fluxes in an identical direction along the loop of the main core when a current flows between the first and second terminals. In addition, the third and fourth windings may be connected in series between the third and fourth terminals, so that the third and fourth windings generate magnetic fluxes in an identical direction along the loop of the main core when a current flows between the third and fourth terminals.

According to the transformer of the aspect of the present disclosure, an input current may be supplied to the first and second terminals, and an output current may be generated from the third and fourth terminals. Alternatively, according to the transformer of the aspect of the present disclosure, an input current may be supplied to the third and fourth terminals, and an output current may be generated from the first and second terminals.

The transformer according to the aspect of the present disclosure may be provided with first to fifth terminals. In addition, the first and second windings may be connected in series between the first and second terminals, so that the first and second windings generate magnetic fluxes in an identical direction along the loop of the main core when a current flows between the first and second terminals. In addition, the third winding may be connected between the third and fifth terminals. In addition, the fourth winding may be connected between the fourth and fifth terminals. In addition, the third and fourth windings may be connected to each other, so that the third and fourth windings generate magnetic fluxes in an identical direction along the loop of the main core when a current flows from the fifth terminal to each of the third and fourth terminals.

According to the transformer of the aspect of the present disclosure, an input current may be supplied to the first and second terminals, a first output current may be generated from the third and fifth terminals, and a second output current may be generated from the fourth and fifth terminals.

The transformer according to the aspect of the present disclosure may be provided with first to fifth terminals, In addition, the first winding may be connected between the first and fifth terminals. In addition, the second winding may be connected between the second and fifth terminals. In addition, the first and second windings may be connected to each other, so that the first and second windings generate magnetic fluxes in an identical direction along the loop of the main core when a current flows from the fifth terminal to each of the first and second terminals. In addition, the third and fourth windings may be connected in series between the third and fourth terminals, so that the third and fourth windings generate magnetic fluxes in an identical direction along the loop of the main core when a current flows between the third and fourth terminals.

According to the transformer of the aspect of the present disclosure, an input current may be supplied to the third and fourth terminals, a first output current may be generated from the first and fifth terminals, and a second output current may be generated from the second and fifth terminals.

A power converter apparatus according to another aspect of the present disclosure is provided with the transformer according to the aspects of the present disclosure.

According to the power converter apparatus of the aspect of the present disclosure, it is possible to increase leakage inductance of the transformer, without increasing a loss of the transformer. Accordingly, it is possible to increase a gain of the power converter apparatus, and increase a power density thereof.

### ADVANTAGEOUS EFFECTS OF INVENTION

The transformer according to one aspect of the present disclosure is capable of adjusting magnetizing inductance and increasing leakage inductance, without increasing a loss.

### BRIEF DESCRIPTION OF DRAWINGS

Fig. 1 is a front view schematically illustrating an exemplary configuration of a transformer 10 according to a first embodiment.
Fig. 2 is a top view schematically illustrating the exemplary configuration of the transformer 10 of Fig. 1.
Fig. 3 is a cross-sectional view schematically illustrating exemplary magnetic fluxes occurring in the transformer 10 of Fig. 1.
Fig. 4 is a front view schematically illustrating an exemplary configuration of a transformer 100 according to a comparison example.
Fig. 5 is a graph schematically illustrating an exemplary operation of the transformer provided with windings 103 and 104 according to the comparison example.
Fig. 6 is a graph schematically illustrating an exemplary operation of the transformer 10 of Fig. 1.
Fig. 7 is a diagram schematically illustrating exemplary connection of windings 3a to 4b in the transformer 10 of Fig. 1.
Fig. 8 is a circuit diagram schematically illustrating a part of an exemplary power converter apparatus provided with the transformer 10 of Fig. 7.
Fig. 9 is a diagram schematically illustrating another exemplary connection of the windings 3a to 4b in the transformer 10 of Fig. 1.
Fig. 10 is a circuit diagram schematically illustrating a part of an exemplary power converter apparatus provided with the transformer 10 of Fig. 9.
Fig. 11 is a diagram schematically illustrating yet another exemplary connection of the windings 3a to 4b in the transformer 10 of Fig. 1.
Fig. 12 is a circuit diagram schematically illustrating a part of an exemplary power converter apparatus provided with the transformer 10 of Fig. 11.
Fig. 13 is a front view schematically illustrating an exemplary configuration of a transformer 10A according to a first modified embodiment of the first embodiment.
Fig. 14 is a front view schematically illustrating an exemplary configuration of a transformer 10B according to a second modified embodiment of the first embodiment.
Fig. 15 is a front view schematically illustrating an exemplary configuration of a transformer 10C according to a third modified embodiment of the first embodiment.
Fig. 16 is a front view schematically illustrating an exemplary configuration of a transformer 10D according to a fourth modified embodiment of the first embodiment.
Fig. 17 is a side view schematically illustrating an exemplary configuration of a transformer 10E according to a fifth modified embodiment of the first embodiment.
Fig. 18 is a top view schematically illustrating the exemplary configuration of the transformer 10E of Fig. 17.
Fig. 19 is a front view schematically illustrating an exemplary configuration of a transformer 10F according to a sixth modified embodiment of the first embodiment.
Fig. 20 is a front view schematically illustrating an exemplary configuration of a transformer 10G according to a seventh modified embodiment of the first embodiment.
Fig. 21 is a side view schematically illustrating an exemplary configuration of a transformer 10H according to an eighth modified embodiment of the first embodiment.
Fig. 22 is a top view schematically illustrating the exemplary configuration of the transformer 10H of Fig. 21.
Fig. 23 is a circuit diagram schematically illustrating an exemplary power converter apparatus according to a second embodiment.
Fig. 24 is a graph schematically illustrating an exemplary operation of a resonance circuit of the power converter apparatus of Fig. 23.

### DESCRIPTION OF EMBODIMENTS

Hereinafter, an embodiment according to one aspect of the present disclosure (hereinafter, each also referred to as "the present embodiment") will be described with reference to the accompanying drawings. In the drawings, the same reference signs indicate similar components.

### [FIRST EMBODIMENT]

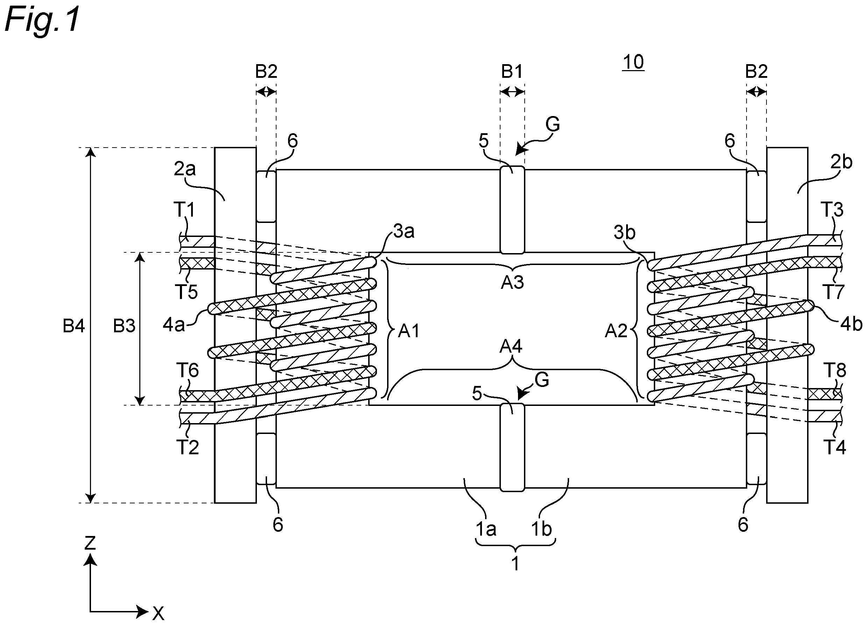

With reference to Figs. 1 to 22, transformers according to a first embodiment will be described.

### [EXEMPLARY CONFIGURATION OF FIRST EMBODIMENT]

Fig. 1 is a front view schematically illustrating an exemplary configuration of the transformer 10 according to the first embodiment. The transformer 10 is provided with a main core 1, at least one bypass core 2a, at least one bypass core 2b, windings 3a, 3b, 4a, and 4b, and at least one gap G.

The main core 1 includes a plurality of main core parts 1a and 1b. The plurality of main core parts 1a and 1b are made of, for example, magnetic substance, such as ferrite. Each of the main core parts 1a and 1b is formed, for example, like the letter U. The plurality of main core parts 1a and 1b are mechanically coupled to each other, for example, via a spacer 5, so as to form at least one gap G therebetween, having a distance B1. The main core 1 as a whole is shaped as a loop.

In the example of Fig. 1, sections A1 to A4 are provided along the loop of the main core 1. In this case, each of the sections A 1 and A2 has a length B3, and the sections A1 and A2 are provided at positions separated from each other. The section A3 is provided between one end of the section A1 and one end of the section A2. The section A4 is provided between another end of the section A1 and another end of the section A2.

In the present description, sections A1 to A4 are also referred to as a "first section", a "second section", a "third section", and a "fourth section", respectively.

The winding 3a is wound around the main core 1 in the section A1 of the loop of the main core 1 (in the example of Fig. 1, around the main core part 1a). The winding 3a has both ends T1 and T2 thereof. The winding 3b is wound around the main core 1 in the section A2 of the loop of the main core 1, the section A2 being separated from the section A1 (in the example of Fig. 1, around the main core part 1b). The winding 3b has both ends T3 and T4 thereof.

In the present description, the winding 3a is also referred to as a "first winding", and the winding 3b is also referred to as a "second winding".

The bypass core 2a is provided along the section A 1 of the main core 1 and outside the winding 3a. The bypass core 2b is provided along the section A2 of the main core 1 and outside the winding 3b. The bypass cores 2a and 2b are made of, for example, magnetic substance, such as ferrite. In the example of Fig. 1, the bypass cores 2a and 2b are linearly shaped. Each of the bypass cores 2a and 2b is mechanically coupled to the main core 1 with a distance B2, for example, via spacers 6. In the example of Fig. 1, the bypass core 2a is mechanically coupled to the main core part 1a, and the bypass core 2b is mechanically coupled to the main core part 1b.

The bypass core 2a extends over a length B4 longer than the length B3 of the section A1. The bypass cores 2b extends over the length B4 longer than the length B3 of the section A2.

In the present description, the bypass core 2a is also referred to as a "first bypass core", and the bypass core 2b is also referred as a "second bypass core".

The winding 4a is wound around the main core 1 in the section A1 of the main core 1 (in the example of Fig. 1, around the main core part 1a), and around the bypass core 2a. The winding 4a has both ends T5 and T6 thereof. The winding 4b is wound around the main core 1 in the section A2 of the main core 1 (in the example of Fig. 1, around the main core part 1b), and around the bypass core 2b. The winding 4b has both ends T7 and T8 thereof.

In the present description, the winding 4a is also referred to as a "third winding", and the winding 4b is also referred to as a "fourth winding".

The windings 3a and 4a are wound so as to contact a surface of the main core 1 at each of turns, and to be alternately arranged on the surface of the main core 1. The winding 3b and 4b are wound so as to contact the surface of the main core 1 at each of turns, and to be alternately arranged on the surface of the main core 1.

The gap G is formed in the main core 1 so as to intersect the loop of the main core 1, at a position separated from both the sections A1 and A2 of the main core 1. In the example of Fig. 1, the transformer 10 has a gap G formed in the section A3, and another gap G formed in the section A4.

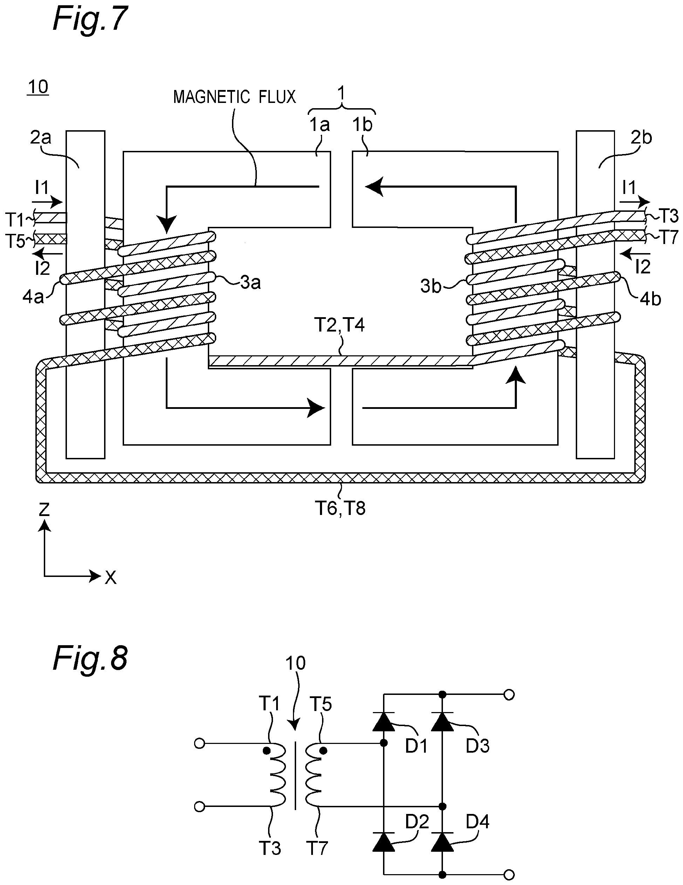

As will be described later with reference to Figs. 7 to 12, the windings 3a and 3b may be used as a primary winding, and the windings 4a and 4b may be used as a secondary winding. In addition, the windings 4a and 4b may be used as a primary winding, and the windings 3a and 3b may be used as a secondary winding.

The plurality of main core parts 1a and 1b may be mechanically coupled to each other using other coupling means, such as supporting frames or resin molds, instead of the spacers 5. The bypass cores 2a and 2b may be mechanically coupled to the main core 1 using other coupling means, such as supporting frames or resin molds, instead of the spacers 6. In the drawings other than Fig. 1, the spacers 5 and 6 (or other coupling means) are omitted for ease of illustration.

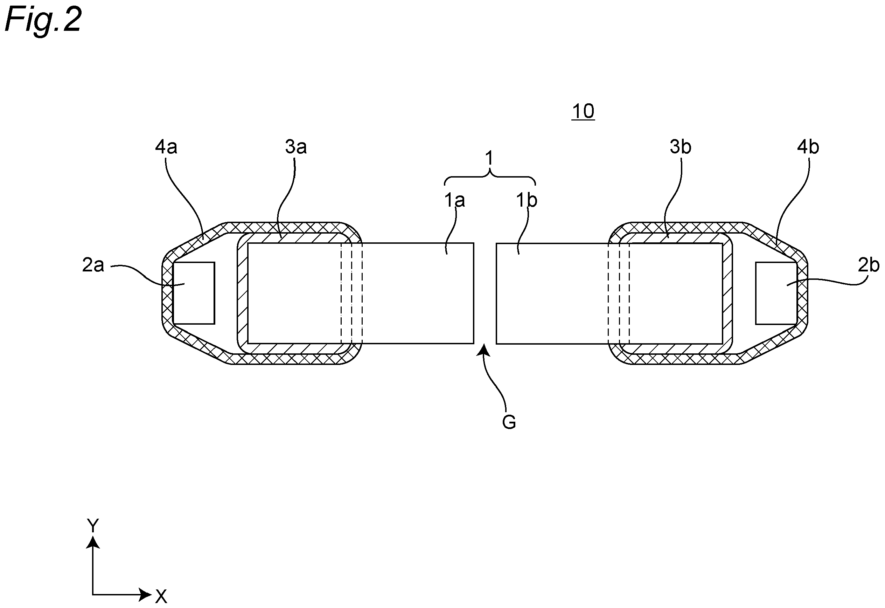

Fig. 2 is a top view schematically illustrating the exemplary configuration of the transformer 10 of Fig. 1. As described above, the winding 3a is wound around the main core part 1a, the winding 3b is wound around the main core part 1b, the winding 4a is wound around the main core part 1a and the bypass core 2a, and the winding 4b is wound around the main core part 1b and the bypass core 2b. Although Fig. 2 shows the winding 4a outside the winding 3a for the purpose of explanation, each of the windings 3a and 4a is wound so as to contact the surface of the main core 1 as described above. Similarly, although Fig. 2 shows the winding 4b outside the winding 3b for the purpose of explanation, each of the windings 3b and 4b is wound so as to contact the surface of the main core 1 as described above.

### [EXEMPLARY OPERATION OF FIRST EMBODIMENT]

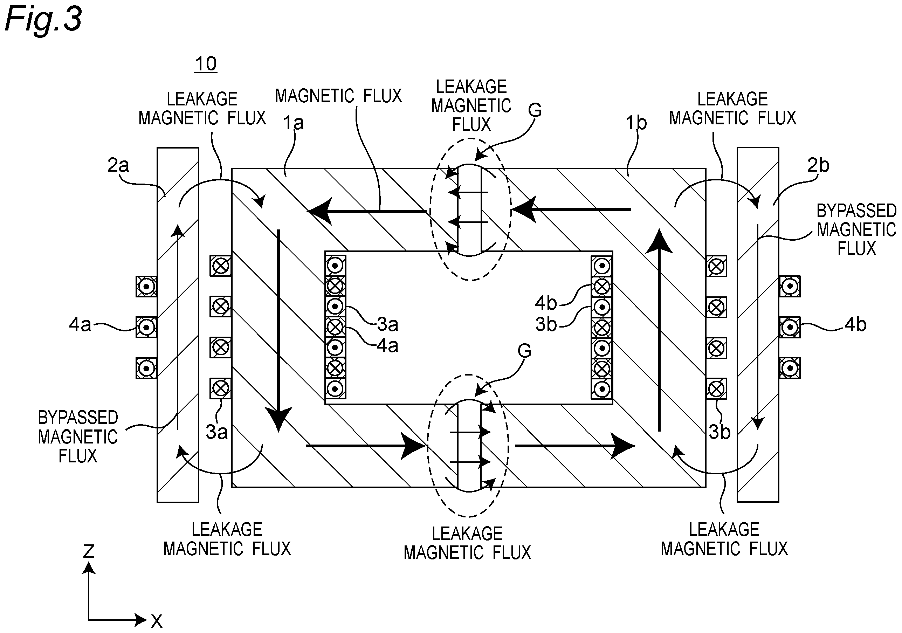

Fig. 3 is a cross-sectional view schematically illustrating exemplary magnetic fluxes occurring in the transformer 10 of Fig. 1. Arrows indicated on the main core 1 and the bypass cores 2a and 2b indicate the magnetic fluxes. When a current flows through the windings 3a and 3b, or through the windings 4a and 4b, the magnetic fluxes occur along the loop of the main core 1, and leakage magnetic fluxes occur in the gaps G, as shown in Fig. 3. The longer the distance B1 of each of the gaps G (see Fig. 1) is, the larger the leakage magnetic fluxes increase. As described above, when the leakage magnetic fluxes intersect the windings, a loss occurs. According to the transformer 10 of the present embodiment, since the gaps G are formed at the positions separated from the windings 3a to 4b, it is possible to prevent the leakage magnetic fluxes occurring in the gaps G, from intersecting the windings 3a to 4b, and accordingly, it is possible to prevent an increase in the loss due to intersection of the leakage magnetic fluxes and the windings 3a to 4b.

In addition, referring to Fig. 3, the magnetic fluxes occur, which originate from the main core 1 and return to the main core 1 again through the bypass cores 2a and 2b (that is, the magnetic fluxes passing through the bypass cores 2a and 2b occur). The magnetic flux passing through the bypass core 2a forms a closed loop going inside and outside the solenoid winding 3a, and intersects the winding 3a. This magnetic flux goes back and forth substantially only inside the solenoid winding 4a, and accordingly, does not form a closed loop going inside and outside the winding 4a, and does not intersect the winding 4a. Similarly, the magnetic flux passing through the bypass cores 2b forms a closed loop going inside and outside the solenoid winding 3b, and intersects the winding 3b. This magnetic flux goes back and forth substantially only inside the solenoid winding 4b, and accordingly, does not form a closed loop going inside and outside the winding 4b, and does not intersect the winding 4b. By generating the magnetic fluxes passing though the bypass cores 2a and 2b, it is possible to increase leakage inductance of the transformer 10 than a case without bypass cores. The smaller the distance B2 between the main core 1 and the bypass cores 2a and 2b is (that is, the thinner the spacers 6 of Fig. 1 are) (see Fig. 1), the easier the magnetic fluxes passing through the bypass cores 2a and 2b occur. In addition, an amount of magnetic flux passing through each of the bypass cores 2a and 2b varies in accordance with the length B4 of each of the bypass cores 2a and 2b (see Fig. 1). Specifically, the larger the areas of regions where the main core 1 and the bypass cores 2a and 2b are opposed to each other are, the larger the amount of the magnetic flux passing through the bypass cores 2a and 2b is. Accordingly, it is possible to adjust magnetizing inductance of the transformer 10 by, for example, changing the distance B2 between the main core 1 and the bypass cores 2a and 2b, and/or changing the length B4 of the bypass cores 2a and 2b.

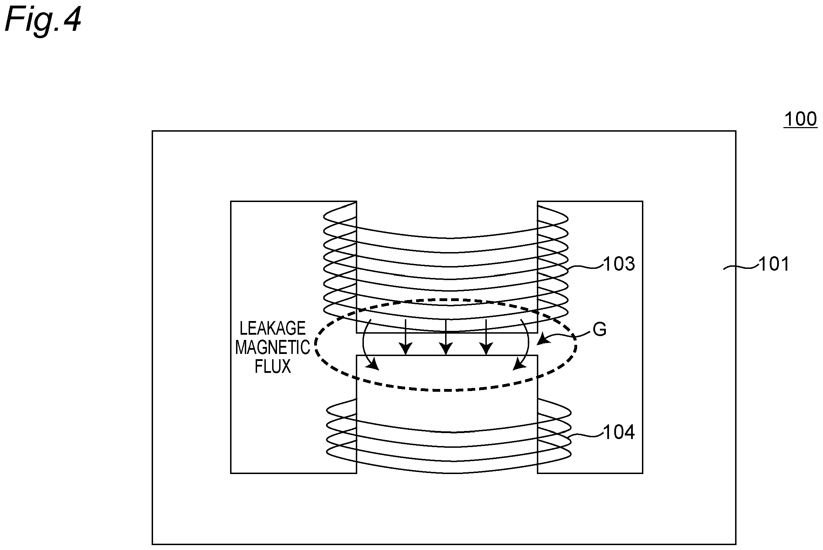

Fig. 4 is a front view schematically illustrating an exemplary configuration of a transformer 100 according to a comparison example. Fig. 4 illustrates an example of a conventional transformer provided with a typical source generating leakage magnetic fluxes. The transformer 100 of Fig. 4 is provided with a core 101, a primary winding 103, and a secondary winding 104. The core 101 is provided with a gap G between a portion around which the primary winding 103 is wound, and a portion around which the secondary winding 104 is wound. In the gap G, leakage magnetic fluxes occur. In order to increase leakage inductance of the transformer 100 of Fig. 4, a distance between the primary winding 103 and the secondary winding 104 should be increased. Accordingly, it is not possible to increase the leakage inductance in an unlimited manner, while keeping numbers of turns of the primary winding 103 and the secondary winding 104 unchanged. In addition, according to the transformer 100 of Fig. 4, since the gap G is close to the primary winding 103 and the secondary winding 104, the leakage magnetic fluxes occurring from the gap G intersect the primary winding 103 or the secondary winding 104, thus generating a loss.

On the other hand, according to the transformer 10 of the present embodiment, by generating the magnetic fluxes passing through the bypass cores 2a and 2b, it is possible to generate leakage inductance larger than that of no bypass core. In addition, according to the transformer 10 of the present embodiment, it is possible to adjust magnetizing inductance by the gaps G in the sections A3 and A4 of the main core 1. In this case, since the gaps G are formed at the positions separated from the windings 3a to 4b as described above, it is possible to prevent the increase in the loss due to intersection of the leakage magnetic fluxes and the windings 3a to 4b.

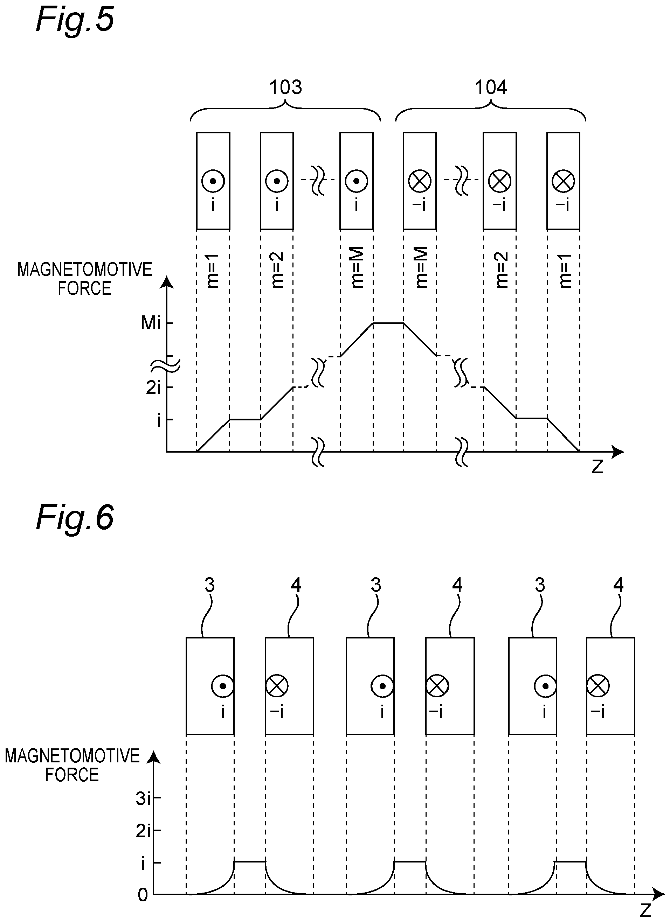

In addition, as shown in Fig. 3, the windings 3a and 4a are wound so as to be alternately arranged on the surface of the main core 1, and the windings 3b and 4b are wound so as to be alternately arranged on the surface of the main core 1. Accordingly, according to the transformer 10 of the present embodiment, it is possible to reduce "proximity effect" occurring in the windings 3a to 4b. Next, reduction in the proximity effect will be described with reference to Figs. 5 and 6.

Fig. 5 is a graph schematically illustrating an exemplary operation of the transformer with the windings 103 and 104 according to the comparison example. The example of Fig. 5 shows a case where the winding 103 is wound over a continuous area on a surface of the core, and the winding 104 is wound over another continuous area on the surface of the core, instead of the case where the windings 103 and 104 are wound so as to be alternately arranged on the surface of the core. Each of the windings 103 and 104 is wound on the surface of the core in a single layer and with a number of turns M. Magnetomotive force is proportional to a current i flowing through the windings, and to a number of turns m. Accordingly, the more the number of turns m of the winding, through which the current i flows in the same direction, increases (m=1, 2,..., M), the more the magnetomotive force increases, and also, the more a loss due to the proximity effect increases.

Fig. 6 is a graph schematically illustrating an exemplary operation of the transformer 10 of Fig. 1. Referring to Fig. 6, a reference sign "3" indicates the winding 3a or 3b, and a reference sign "4" indicates the winding 4a or 4b. As described above, one of the windings 3a and 4a alternately arranged on the surface of the main core 1 is used as a primary winding, and the other is used as a secondary winding. Similarly, one of the windings 3b and 4b alternately arranged on the surface of the main core 1 is used as a primary winding, and the other is used as a secondary winding. A current flows through the secondary winding in a direction opposite to that of a current flowing through the primary winding flows. Accordingly, currents of opposite directions flow through the windings 3 and 4 alternately arranged on the surface of the main core 1, respectively. Therefore, according to the transformer 10 of the present embodiment, since the primary winding and the secondary winding are alternately arranged, the magnetomotive force becomes less likely to increase, and it is possible to reduce a loss due to the proximity effect than the case where the windings are wound as shown in Fig. 5.

Next, with reference to Figs. 7 to 12, connections of the windings 3a to 4b will be described.

Fig. 7 is a diagram schematically illustrating one exemplary connection of the windings 3a to 4b in the transformer 10 of Fig. 1. The end T2 of the winding 3a and the end T4 of the winding 3b are connected to each other. The end T6 of the winding 4a and the end T8 of the winding 4b are connected to each other. The end T1 of the winding 3a, the end T3 of the winding 3b, the end T5 of the winding 4a, and the end T7 of the winding 4b are used as input or output terminals of the transformer 10.

In the example of Fig. 7, the end T1 of the winding 3a is also referred to as a "first terminal", the end T3 of the winding 3b is also referred to as a "second terminal", the end T5 of the winding 4a is also referred to as a "third terminal", and the end T7 of the winding 4b is also referred to as a "fourth terminal".

The windings 3a and 3b are connected in series between the ends T1 and T3, so that the windings 3a and 3b generate magnetic fluxes in an identical direction along the loop of the main core 1 when a current flows between the end T1 of the winding 3a and the end T3 of the winding 3b. The windings 4a and 4b are connected in series between ends T5 and T7, so that the windings 4a and 4b generate magnetic fluxes in an identical direction along the loop of the main core 1 when a current flows between the end T5 of the winding 4a and the end T7 of the winding 4b. Accordingly, in a case where the windings 3a and 3b are used as the primary winding, and the windings 4a and 4b are used as the secondary winding, when an input current I1 flows between the ends T1 and T3, an output current I2 flows between the ends T5 and T7 in accordance with change in the magnetic fluxes along the loop of the main core 1. Alternatively, in a case where the windings 4a and 4b are used as the primary winding, and the windings 3a and 3b are used as the secondary winding, when an input current I2 flows between the ends T5 and T7, an output current I1 flows between the ends T1 and T3 in accordance with change in the magnetic fluxes along the loop of the main core 1.

Fig. 8 is a circuit diagram schematically illustrating a part of an exemplary power converter apparatus provided with the transformer 10 of Fig. 7. In a case where the windings 3a and 3b are used as the primary winding, and the windings 4a and 4b are used as the secondary winding, a rectifier circuit, including a diode bridge constituted of diodes D1 to D4, may be connected to the end T5 of the winding 4a and the end T7 of the winding 4b.

In the example of Figs. 7 and 8, numbers of turns of the windings 3a and 3b may be equal to each other, or may be different from each other. In addition, in the example of Figs. 7 and 8, numbers of turns of the windings 4a and 4b may be equal to each other, or may be different from each other.

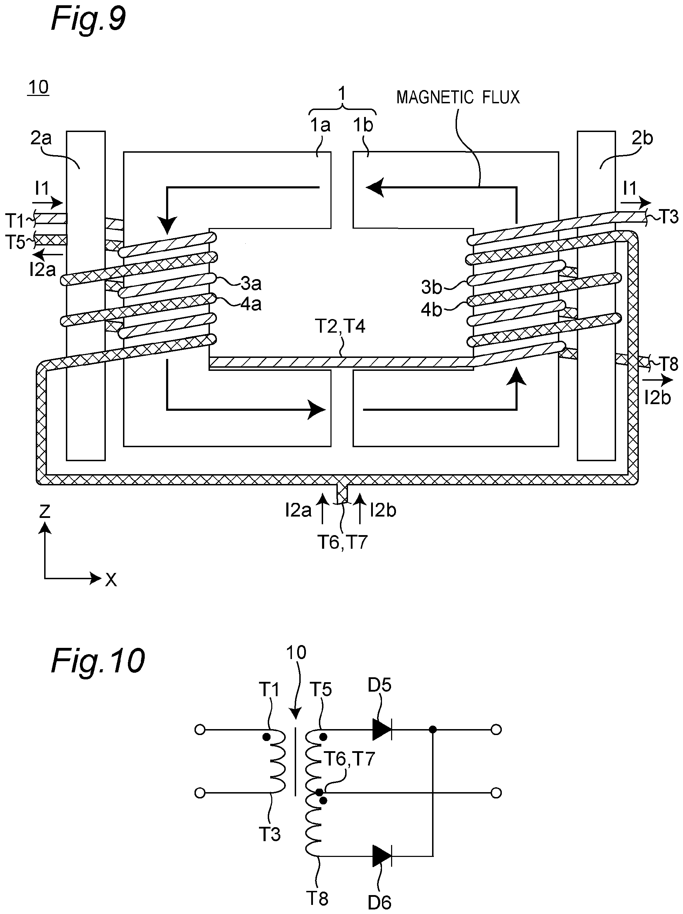

Fig. 9 is a diagram schematically illustrating another exemplary connection of the windings 3a to 4b in the transformer 10 of Fig. 1. The end T2 of the winding 3a and the end T4 of the winding 3b are connected to each other. The end T6 of the winding 4a and the end T7 of the winding 4b are connected to each other. The end T1 of the winding 3a and the end T3 of the winding 3b are used as input terminals of the transformer 10, and the end T5 of the winding 4a and the end T8 of the winding 4b are used as output terminals of the transformer 10. In addition, the end T6 of the winding 4a and the end T7 of the winding 4b, which are connected to each other, are also used as an output terminal of the transformer 10. In the example of Fig. 9, the windings 3a and 3b are used as a primary winding, and the windings 4a and 4b are used as a secondary winding.

In the example of Fig. 9, the end T1 of the winding 3a is also referred to as a "first terminal", the end T3 of the winding 3b is also referred to as a "second terminal", the end T5 of the winding 4a is also referred to as a "third terminal", the end T8 of the winding 4b is also referred to as a "fourth terminal", and the end T6 of the winding 4a and the end T7 of the winding 4b, which are connected to each other, are also referred to as a "fifth terminal".

The windings 3a and 3b are connected in series between the ends T1 and T3, so that the windings 3a and 3b generate magnetic fluxes in an identical direction along the loop of the main core 1 when a current flows between the end T1 of the winding 3a and the end T3 of the winding 3b. The windings 4a and 4b are connected to each other, so that the windings 4a and 4b generate magnetic fluxes in an identical direction along the loop of the main core 1, when a current flows from the end T6 to the end T5 of the winding 4a, and a current flows from the end T7 to the end T8 of the winding 4b (or when the current flows from the end T5 to the end T6 of the winding 4a, and the current flows from the end T8 to the end T7 of the winding 4b). Accordingly, when an input current I1 flows between the end T1 of the winding 3a and the end T3 of the winding 3b, an output current I2a flows from the end T6 to the end T5 of the winding 4a, and an output current I2b flows from the end T7 to the end T8 of the winding 4b (or the output current I2a flows from the end T5 to the end T6 of the winding 4a, and the output current I2b flows from the end T8 to the end T7 of the winding 4b), in accordance with change in the magnetic fluxes along the loop of the main core 1.

Fig. 10 is a circuit diagram schematically illustrating a part of an exemplary power converter apparatus provided with the transformer 10 of Fig. 9. When numbers of turns of the windings 4a and 4b are equal to each other, the end T6 of the winding 4a and the end T7 of the winding 4b, which are connected to each other, constitute a center tap of the secondary winding. In this case, a rectifier circuit, including diodes D5 and D6 and using the center tap, may be connected to the ends T5 to T8 of the windings 4a and 4b.

In the example of Figs. 9 and 10, the numbers of turns of the windings 3a and 3b may be equal to each other, or may be different from each other. In addition, in the example of Figs. 9 and 10, the numbers of turns of the windings 4a and 4b are set to be equal to each other as described above.

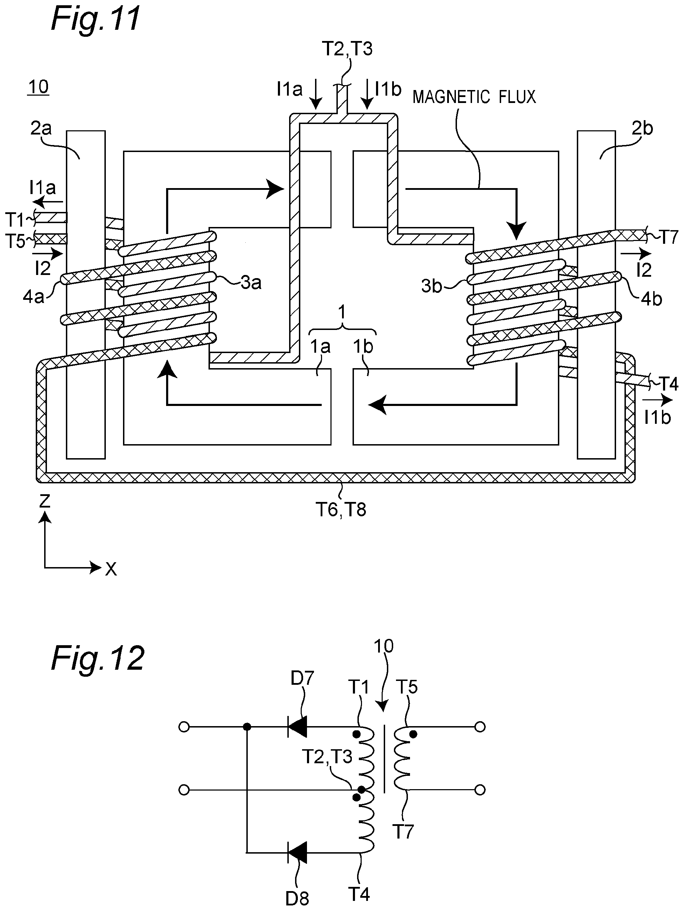

Fig. 11 is a diagram schematically illustrating yet another exemplary connection of the windings 3a to 4b in the transformer 10 of Fig. 1. The end T2 of the winding 3a and the end T3 of the winding 3b are connected to each other. The end T6 of the winding 4a and the end T8 of the winding 4b are connected to each other. The end T5 of the winding 4a and the end T7 of the winding 4b are used as input terminals of the transformer 10, and the end T1 of the winding 3a and the end T4 of the winding 3b are used as output terminals of the transformer 10. In addition, the end T2 of the winding 3a and the end T3 of the winding 3b, which are connected to each other, are also used as an output terminal of the transformer 10. In the example of Fig. 11, the windings 4a and 4b are used as a primary winding, and the windings 3a and 3b are used as a secondary winding.

In the example of Fig. 11, the end T1 of the winding 3a is also referred to as a "first terminal", the end T4 of the winding 3b is also referred to as a "second terminal", the end T5 of the winding 4a is also referred to as a "third terminal", the end T7 of the winding 4b is also referred to as a "fourth terminal", and the end T2 of the winding 3a and the end T3 of the winding 3b, which are connected to each other, are also referred to as a "fifth terminal".

The windings 3a and 3b are connected to each other, so that the windings 3a and 3b generate magnetic fluxes in an identical direction along the loop of the main core 1, when a current flows from the end T2 to the end T1 of the winding 3a, and a current flows from the end T3 to the end T4 of the winding 3b (or when the current flows from the end T1 to the end T2 of the winding 3a, and the current flows from the end T4 to the end T3 of the winding 3b). The windings 4a and 4b are connected in series between ends T5 and T7, so that the windings 4a and 4b generate magnetic fluxes in an identical direction along the loop of the main core 1 when a current flows between the end T5 of the winding 4a and the end T7 of the winding 4b. Accordingly, when an input current I2 flows between the end T5 of the winding 4a and the end T7 of the winding 4b, an output current I1a flows from the end T2 to the end T1 of the winding 3a, and an output current I1b flows from the end T3 to the end T4 of the winding 3b (or the output current I1a flows from the end T1 to the end T2 of the winding 3a, and the output current I1b flows from the end T4 to the end T3 of the winding 3b), in accordance with change in the magnetic fluxes along the loop of the main core 1.

Fig. 12 is a circuit diagram schematically illustrating a part of an exemplary power converter apparatus provided with the transformer 10 of Fig. 11. When numbers of turns of the windings 3a and 3b are equal to each other, the end T2 of the winding 3a and the end T3 of the winding 3b, which are connected to each other, constitute a center tap of the secondary winding. In this case, a rectifier circuit, including diodes D7 and D8 and using the center tap, may be connected to the ends T1 to T4 of the windings 3a and 3b.

In the example of Figs. 11 and 12, the numbers of turns of the windings 3a and 3b are set to be equal to each other as described above. In addition, in the example of Fig. 11 and 12, the numbers of turns of the windings 4a and 4b may be equal to each other, or be different from each other.

As described with reference to Figs. 7 to 12, the transformer 10 according to the present embodiment is applicable to, for example, the power converter apparatus provided with the rectifier circuit including the diode bridge, and also applicable to the power converter apparatus provided with the rectifier circuit using the center tap.

### [ADVANTAGEOUS EFFECTS OF FIRST EMBODIMENT]

The transformer 10 according to the present embodiment is capable of generating large leakage inductance by generating the magnetic fluxes passing through the bypass cores 2a and 2b. In addition, the transformer 10 according to the present embodiment is capable of preventing the leakage magnetic fluxes from intersecting the windings 3a to 4b by generating the leakage magnetic fluxes in the gaps G formed at the positions separated from the windings 3a to 4b, and capable of adjusting the magnetizing inductance while preventing an increase in a loss due to intersection of the leakage magnetic fluxes and the windings 3a to 4b. As described above, the transformer 10 according to the present embodiment is capable of increasing the leakage inductance without increasing the loss.

In addition, the transformer 10 according to the present embodiment is capable of changing an amount of the leakage magnetic fluxes in accordance with the distance of each of the gaps G. In addition, the transformer 10 according to the present embodiment is capable of changing the amount of the magnetic fluxes passing through the bypass cores 2a and 2b, and accordingly, capable of changing the leakage inductance generated by the magnetic fluxes passing through the bypass cores 2a and 2b, in accordance with the distance B2 between the main core 1 and the bypass cores 2a and 2b, and/or in accordance with the length of the bypass cores 2a and 2b.

In addition, according to the transformer 10 of the present embodiment, since the primary winding and the secondary winding are wound so as to be alternately arranged on the surface of the main core 1, it is possible to reduce a loss due to the proximity effect of the windings than the case where the windings are not wound in such a manner.

In addition, according to the transformer 10 of the present embodiment, since the windings 3a to 4b are wound so as to contact the surface of the main core 1 at each of turns (that is, in the single layer), the transformer 10 is capable of well dissipating heat generated by the windings 3a to 4b. Although a part of each of the windings 3a and 3b is sandwiched by the main core 1 and the bypass cores 2a and 2b, it does not significantly inhibit dissipation of heat of the windings 3a and 3b.

In addition, according to the transformer 10 of the present embodiment, although the windings 3a to 4b are wound on the surface of the main core 1 in the single layer as described above, the windings 3a to 4b are wound in the plurality of sections A1 and A2 along the loop of the main core 1, and therefore, it is possible to effectively utilize the surface of the main core 1, and increase the numbers of turns of the windings 3a to 4b.

In addition, the bypass cores 2a and 2b can be easily incorporated into the transformer 10 according to the present embodiment, owing to the simple configuration thereof.

Patent Document 1 does not consider a loss due to intersection of leakage magnetic flux and windings, and accordingly, it is not possible to reduce such loss due to leakage magnetic flux.

In addition, according to Patent Document 1, since the magnetic gap pieces are located between the primary winding and the secondary winding, the magnetic flux is shielded by the windings, and less likely to pass through the magnetic gap pieces. Therefore, it is considered that even though having the magnetic gap pieces, it is not effective to increase the leakage inductance.

In addition, according to Patent Document 1, the primary winding is wound around one side of an iron core shaped as a rectangular loop, the secondary winding is wound around the primary winding, and the magnetic gap pieces are inserted between the primary winding and the secondary winding at every certain angle. A length of the magnetic gap pieces are restricted to a width or less of the primary winding and the secondary winding. Therefore, according to Patent Document 1, it is not possible to change the length of the magnetic gap pieces to any length in order to change an amount of the leakage magnetic flux.

In addition, according to Patent Document 1, the primary winding is wound around the iron core, and the secondary winding is wound around the primary winding, as described above, and it is considered that proximity effect occurs in each of the primary winding and the secondary winding. According to Patent Document 1, it is not possible to reduce a loss due to the proximity effect.

In addition, according to Patent Document 1, since the primary winding is wound around the iron core, and the secondary winding is wound around the primary winding, it is considered that it is difficult to dissipate heat generated by the primary winding and the secondary winding, and a temperature of the transformer easily increases.

According to Patent Document 2, since the first winding and the second winding are wound around the inner leg of the first magnetic body, it is not possible to form a gap in the first magnetic body at a position separated from the first winding and the second winding. Accordingly, it is not possible to form a gap so that leakage magnetic flux is less likely to intersect the windings, and it is difficult to increase the leakage magnetic flux without increasing a loss.

In addition, according to Patent Document 2, the first winding is wound around the first magnetic body, and the second winding is wound around the first winding, and it is considered that proximity effect occurs in each of the first winding and the second winding. According to Patent Document 2, it is not possible to reduce a loss due to the proximity effect.

In addition, according to Patent Document 2, since the first winding is wound around the first magnetic body, and the second winding is wound around the first winding, it is considered that it is difficult to dissipate heat generated by the primary winding and the secondary winding, and a temperature of the transformer easily increases.

On the other hand, the transformer 10 according to the present embodiment achieves all of increasing the leakage inductance, preventing an increase in the loss due to intersection of the leakage magnetic fluxes and the windings, and reducing the loss due to the proximity effect. It is not easy to arrive at the transformer capable of achieving all of these requirements.

### [MODIFIED EMBODIMENTS OF FIRST EMBODIMENT]

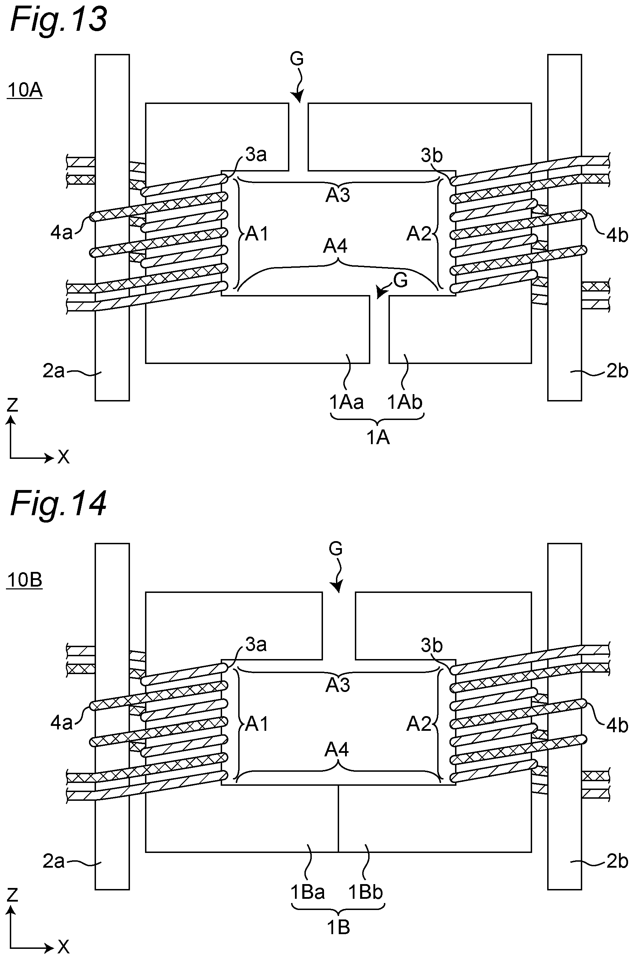

Next, with reference to Figs. 13 to 22, modified embodiments of the first embodiment will be described.

### [FIRST MODIFIED EMBODIMENT OF FIRST EMBODIMENT]

Fig. 13 is a front view schematically illustrating an exemplary configuration of a transformer 10A according to a first modified embodiment of the first embodiment. The transformer 10A of Fig. 13 is provided with a main core 1A, instead of the main core 1 of Fig. 1. The main core 1A includes a plurality of main core parts 1Aa and 1Ab. Although Fig. 1 shows a gap G of the section A3 and a gap G of the section A4 at equal distances from the section A1 and the section A2, the gaps G may be formed at any positions in the sections A3 and A4. In the example of Fig. 13, the transformer 10A is provided with a gap G formed in the section A3 closer to the section A1 than to the section A2, and another gap G formed in the section A4 closer to the section A2 than to the section A1. The gaps G may be formed at any positions as long as the gaps G are formed in the main core 1A so as to intersect the loop of the main core 1A, at positions separated from both the sections A1 and A2 of the main core 1A, so that leakage magnetic fluxes occurring in the gaps G do not substantially intersect windings 3a to 4b.

### [SECOND MODIFIED EMBODIMENT OF FIRST EMBODIMENT]

Fig. 14 is a front view schematically illustrating an exemplary configuration of a transformer 10B according to a second modified embodiment of the first embodiment. The transformer 10B of Fig. 14 is provided with a main core 1B, instead of the main core 1 of Fig. 1. The main core 1B includes a plurality of main core parts 1Ba and 1Bb. The main core 1B is provided with a gap G formed in the section A3. The transformer according to the present embodiment may be provided with only one gap in accordance with an amount of a desired leakage magnetic flux. The main core 1B may be provided with one gap G formed in the section A4, instead of the gap G formed in the section A3.

In a case where the main core 1B is provided with only one gap G, the main core 1B may be integrally formed, instead of being constituted of a plurality of main core parts.

### [THIRD MODIFIED EMBODIMENT OF FIRST EMBODIMENT]

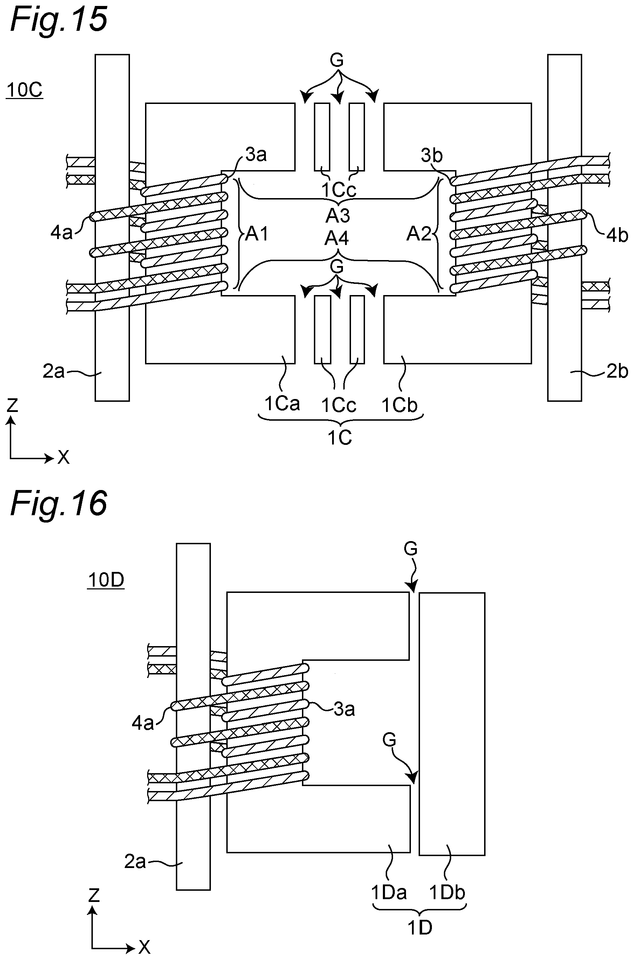

Fig. 15 is a front view schematically illustrating an exemplary configuration of a transformer 10C according to a third modified embodiment of the first embodiment. The transformer 10C of Fig. 15 is provided with a main core 1C, instead of the main core 1 of Fig. 1. The main core 1C includes a plurality of main core parts 1Ca, 1Cb, and 1Cc. In the example of Fig. 15, the transformer 10C is provided with a plurality of gaps G formed in the section A3, and a plurality of gaps G formed in the section A4. The transformer according to the present embodiment may be provided with a plurality of gaps G formed in the main core 1 so as to intersect the loop of the main core 1C in at least one of the sections A3 and A4, in accordance with an amount of desired leakage magnetic fluxes. The shorter the distance of the gaps G decreases, the smaller the leakage magnetic fluxes leak from the gap G, and accordingly, the leakage magnetic fluxes becomes less likely to intersect the windings.

A plurality of gaps G may be provided in one of the sections A3 and A4, and one gap G may be provided in the other of the sections A3 and A4. In addition, a plurality of gaps G may be provided in one of the sections A3 and A4, and no gap G may be provided in the other of the sections A3 and A4.

### [FOURTH MODIFIED EMBODIMENT OF FIRST EMBODIMENT]

Fig. 16 is a front view schematically illustrating an exemplary configuration of a transformer 10D according to a fourth modified embodiment of the first embodiment. In the transformer 10D of Fig. 16, the windings 3b and 4b and the bypass core 2b of Fig. 1 are removed. In addition, the transformer 10D of Fig. 16 is provided with a main core 1D, instead of the main core 1 of Fig. 1. The main core 1D includes a plurality of main core parts 1Da and 1Db. The main core part 1Da is formed, for example, like the letter U, in a manner similar to that of the main core part 1a of Fig. 1, and the main core part 1Db is formed, for example, like the letter I. The plurality of main core parts 1Da and 1Db are mechanically coupled to each other so as to form at least one gap G therebetween. The main core 1D as a whole is shaped as a loop.

The transformer 10D of Fig. 16 is also capable of generating large leakage inductance by generating a magnetic flux passing through the bypass core 2a, in a manner similar to that of the transformer 10 of Fig. 1. In addition, the transformer 10D of Fig. 16 is also capable of preventing the leakage magnetic fluxes from intersecting the windings 3a and 4a by generating the leakage magnetic fluxes in the gaps G formed at positions separated from the windings 3a and 4a, and capable of adjusting the magnetizing inductance while preventing an increase in a loss due to intersection of the leakage magnetic fluxes and the windings 3a and 4a, in a manner similar to that of the transformer 10 of Fig. 1. As described above, the transformer 10D of Fig. 16 is capable of increasing the leakage inductance without increasing a loss.

In addition, the transformer 10D of Fig. 16 is also capable of changing an amount of the leakage magnetic flux in accordance with a distance of the gaps G, in a manner similar to that of the transformer 10 of Fig. 1. In addition, the transformer 10D of Fig. 16 is also capable of changing an amount of the magnetic flux passing through the bypass core 2a, and accordingly, also capable of changing leakage inductance generated by the magnetic flux passing through the bypass core 2a, in accordance with a distance of the main core 1D and the bypass core 2a, and/or in accordance with a length of the bypass core 2a, in a manner similar to that of the transformer 10 of Fig. 1.

In addition, also according to the transformer 10D of Fig. 16, since the primary winding and the secondary winding are wound so as to be alternately arranged on the surface of the main core 1D, it is possible to reduce a loss due to the proximity effect of the windings than the case where the windings are not wound so, in a manner similar to that of the transformer 10 of Fig. 1.

In addition, also according to the transformer 10D of Fig. 16, since the windings 3a and 4a are wound so as to contact the surface of the main core 1D at each of turns (that is, in a single layer), the transformer 10D is capable of well dissipating heat generated by the windings 3a and 4a, in a manner similar to that of the transformer 10 of Fig. 1.

In addition, the bypass core 2a can be easily incorporated into the transformer 10D of Fig. 16, owing to the simple configuration thereof, in a manner similar to that of the transformer 10 of Fig. 1.

### [FIFTH MODIFIED EMBODIMENT OF FIRST EMBODIMENT]

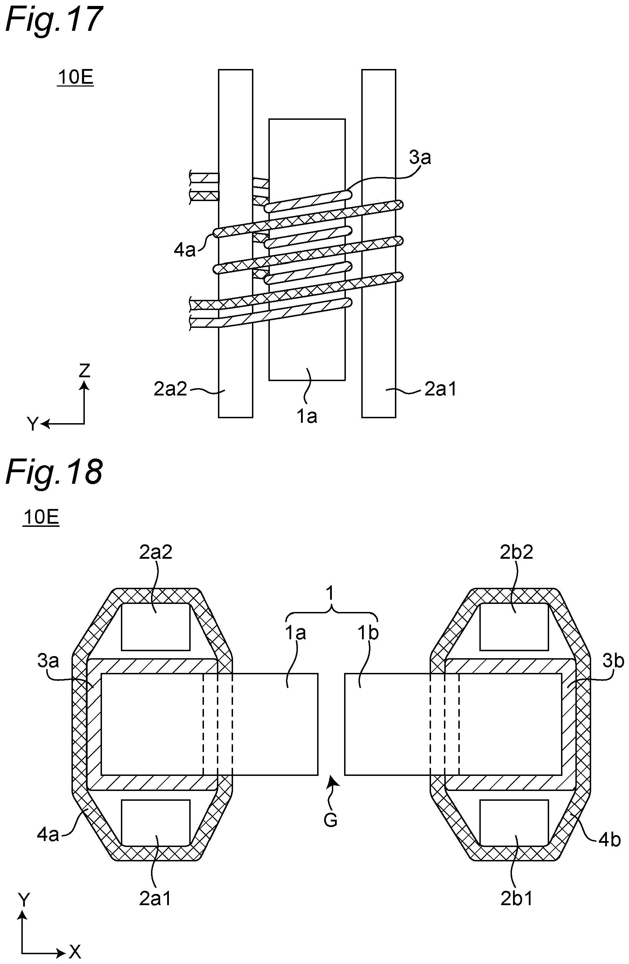

Fig. 17 is a side view schematically illustrating an exemplary configuration of a transformer 10E according to a fifth modified embodiment of the first embodiment. Fig. 18 is a top view schematically illustrating the exemplary configuration of the transformer 10E of Fig. 17. The transformer 10E of Fig. 17 is provided with bypass cores 2a1 to 2b2, instead of the bypass cores 2a and 2b of Fig. 1.

The bypass cores 2a1 and 2a2 are provided along the section of the main core 1 around which the winding 3a is wound, and are provided outside the winding 3a. The bypass cores 2b1 and 2b2 are provided along the section of the main core 1 around which the winding 3b is wound, and are provided outside the winding 3b. The winding 4a is wound around the main core 1 and the bypass cores 2a1 and 2a2, in the section of the main core 1 around which the winding 3a is wound. The winding 4b is wound around the main core 1 and the bypass cores 2b1 and 2b2, in the section of the main core 1 around which the winding 3b is wound.

In the example of Fig. 18, bypass cores 2a1 and 2a2 are also referred to as "first bypass cores", and the bypass cores 2b1 and 2b2 are also referred to as "second bypass cores".

The transformer 10E of Fig. 17 is provided with two bypass cores 2a1 and 2a2 associated with the windings 3a and 4a, and further provided with two bypass cores 2b1 and 2b2 associated with the windings 3b and 4b. Accordingly, it is possible to increase an amount of magnetic flux passing through the bypass cores 2a1, 2a2, 2b1, and 2b2, than a case where only one bypass core 2a and one bypass core 2b are provided as shown in Fig. 1.

Three or more bypass cores may be provided for the windings 3a and 4a, and three or more bypass cores may be provided for the windings 3b and 4b.

### [SIXTH MODIFIED EMBODIMENT OF FIRST EMBODIMENT]

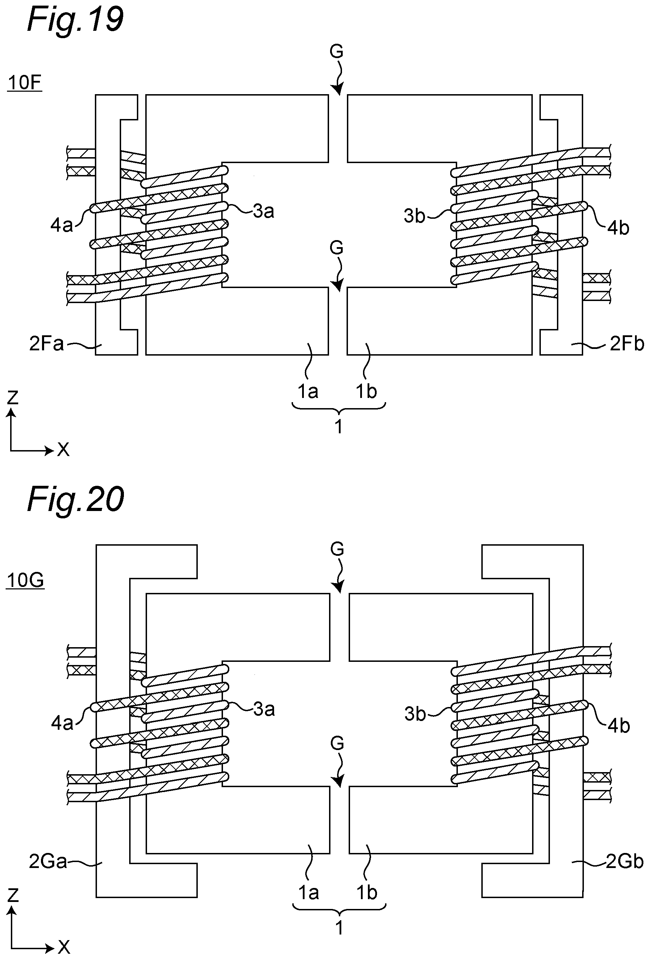

Fig. 19 is a front view schematically illustrating an exemplary configuration of a transformer 10F according to a sixth modified embodiment of the first embodiment. The transformer 10F of Fig. 19 is provided with bypass cores 2Fa and 2Fb, instead of the bypass cores 2a and 2b of Fig. 1.

The bypass cores 2Fa and 2Fb extend along the main core 1, and are bent toward the main core 1 at both ends of each of the bypass cores 2Fa and 2Fb.

In the example of Fig. 19, the bypass core 2Fa is also referred to as a "first bypass core", and the bypass core 2Fb is also referred to as a "second bypass core".

In a case where a distance between the main core and each of the bypass cores is not sufficiently small, magnetic fluxes passing through the bypass cores 2Fa and 2Fb are less likely to occur. According to the transformer 10F of Fig. 19, the distance between the main core 1 and each of the bypass cores 2Fa and 2Fb is shortened by bending the both ends of each of the bypass cores 2Fa and 2Fb. Accordingly, the magnetic fluxes more easily pass through the bypass cores 2Fa and 2Fb than the transformer 10 of Fig. 1, and it is possible to increase an amount of the magnetic fluxes passing through the bypass cores 2Fa and 2Fb. Accordingly, it is possible to increase leakage inductance than that of the transformer 10 of Fig. 1.

### [SEVENTH MODIFIED EMBODIMENT OF FIRST EMBODIMENT]

Fig. 20 is a front view schematically illustrating an exemplary configuration of a transformer 10G according to a seventh modified embodiment of the first embodiment. The transformer 10G of Fig. 20 is provided with bypass cores 2Ga and 2Gb, instead of the bypass cores 2a and 2b of Fig. 1.

The bypass cores 2Ga and 2Gb extend along the main core 1, and are bent toward the main core 1 at both ends of each of the bypass cores 2Ga and 2Gb.

In the example of Fig. 20, the bypass core 2Ga is also referred to as a "first bypass core", and the bypass core 2Gb is also referred to as a "second bypass core".

As described above, the larger the areas of regions where the main core and the bypass cores are opposed to each other are, the larger the amount of the magnetic fluxes passing through the bypass cores 2Ga and 2Gb is. According to the transformer 20G of Fig. 20, the areas of the regions where the main core 1 and the bypass cores 2Ga and 2Gb are opposed to each other increases by bending the both ends of each of the bypass cores 2Ga and 2Gb. Accordingly, the magnetic fluxes more easily pass through the bypass cores 2Ga and 2Gb than the transformer 10 of Gig. 1, and it is possible to increase an amount of the magnetic fluxes passing through the bypass cores 2Ga and 2Gb. Accordingly, it is possible to increase leakage inductance than that of the transformer 10 of Gig. 1.

### [EIGHTH MODIFIED EMBODIMENT OF FIRST EMBODIMENT]

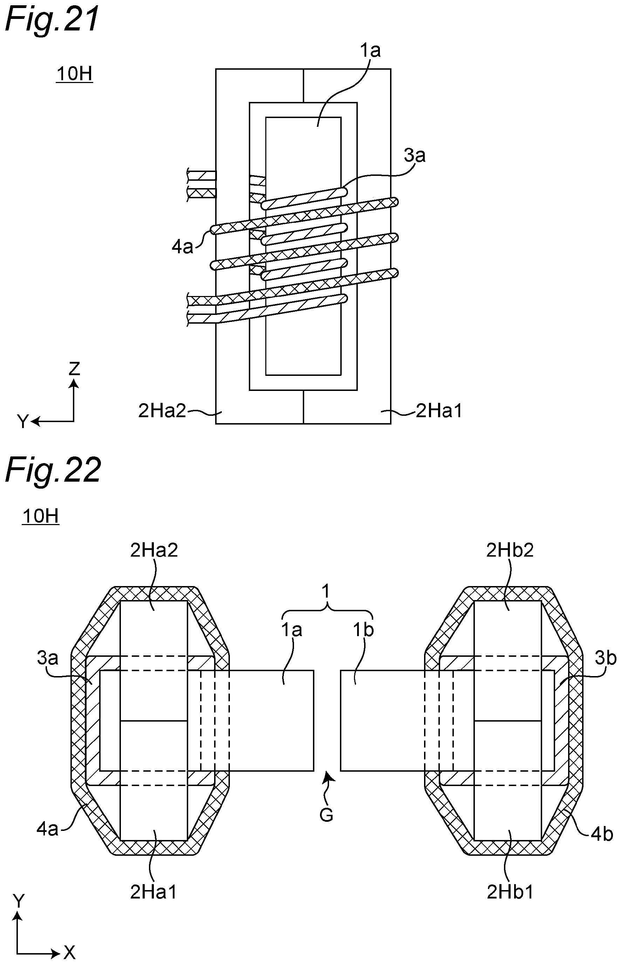

Fig. 21 is a side view schematically illustrating an exemplary configuration of a transformer 10H according to an eighth modified embodiment of the first embodiment. Fig. 22 is a top view schematically illustrating the exemplary configuration of the transformer 10H of Fig. 21. The transformer 10H of Fig. 21 is provided with bypass cores 2Ha1 to 2Hb2, instead of the bypass cores 2a and 2b of Fig. 1. The transformer 10H corresponds to a combination of the fifth modified embodiment and the seventh modified embodiment.

The bypass cores 2Ha1 and 2Ha2 are provided along the section of the main core 1 around which the winding 3a is wound, and are provided outside the winding 3a. The bypass cores 2Hb 1 and 2Hb2 are provided along the section of the main core 1 around which the winding 3b is wound, and are provided outside the winding 3b. The winding 4a is wound around the main core 1 and the bypass cores 2Ha1 and 2Ha2, in the section of the main core 1 around which the winding 3a is wound. The winding 4b is wound around the main core 1 and the bypass cores 2Hb1 and 2Hb2, in the section of the main core 1 around which the winding 3b is wound. The bypass cores 2Ha1 to 2Hb2 extend along the main core 1, and are bent toward the main core 1 at both ends of each of the bypass cores 2Ha1 to 2Hb2.

As shown in Fig. 21, the bypass cores 2Ha1 and 2Ha2 may contact with each other at both ends thereof. Similarly, the bypass cores 2Hb1 and 2Hb2 may contact with each other at both ends thereof.

In the example of Fig. 21, the bypass cores 2Ha1 and 2Ha2 are also referred to as "first bypass cores", and the bypass cores 2Hb1 and 2Hb2 are also referred to as "second bypass cores".

According to the transformer 20H of Fig. 21, it is possible to increase leakage inductance than that of the transformer 10E of Fig. 17, and than that of the transformer 10G of Fig. 20.

### [SECOND EMBODIMENT]

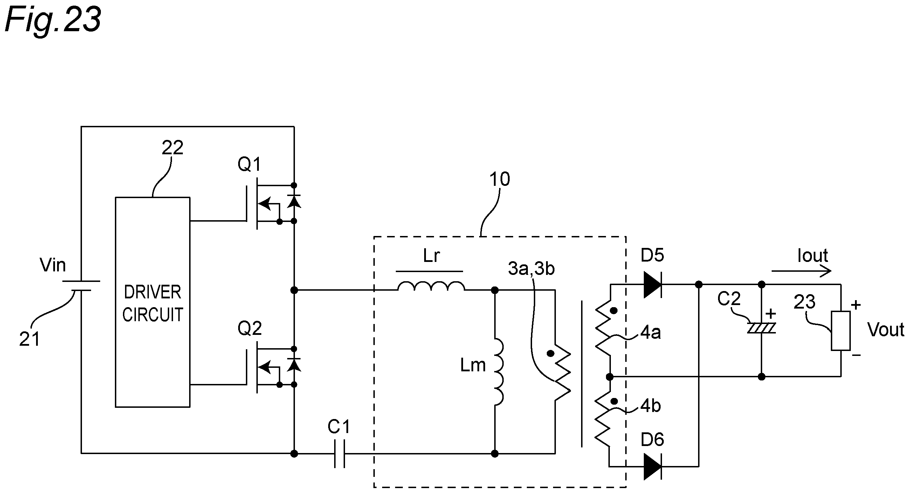

With reference to Figs. 23 to 24, a power converter apparatus according to a second embodiment will be described.

### [EXEMPLARY CONFIGURATION OF SECOND EMBODIMENT]

Fig. 23 is a circuit diagram schematically illustrating an exemplary power converter apparatus according to the second embodiment. The power converter apparatus of Fig. 23 illustrates one example of a current resonance type DC-DC converter. The power converter apparatus of Fig. 23 is provided with a transformer 10, a DC power supply 21, a driver circuit 22, a load 23, capacitors C1 and C2, diodes D5 and D6, and switch elements Q1 and Q2.

The DC power supply 21 supplies a DC input voltage Vin. The switch elements Q1 and Q2 operate under control of the driver circuit 22. The transformer 10 of Fig. 23 is configured, for example, in a manner similar to that of the transformer 10 of Fig. 1. The transformer 10 equivalently includes inductors Lr and Lm. The inductors Lr and Lm and the capacitor C1 constitute a resonance circuit. The transformer 10 is connected to a rectifier circuit including the diodes D5 and D6 and using a center tap, as described with reference to Figs. 9 and 10. A rectified voltage is smoothed by the capacitor C2, and a smoothed output voltage Vout and output current Iout are supplied to the load 23.

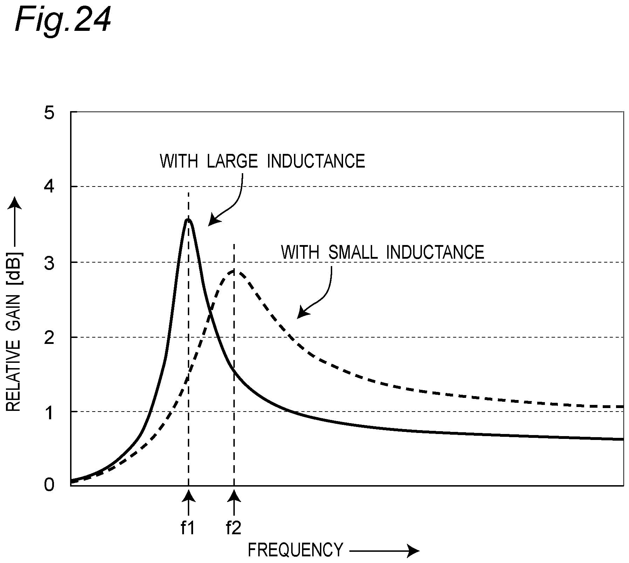

Fig. 24 is a graph schematically illustrating an exemplary operation of the resonance circuit of the power converter apparatus of Fig. 23. The graph of Fig. 24 shows frequency characteristics of the circuit of Fig. 23, including the inductors Lr and Lm and the capacitor C1, the frequency characteristics exhibited with small or large inductance of the inductor Lr. According to the power converter apparatus of Fig. 23, a gain of the resonance circuit is increased by decreasing a switching frequency of the switch elements Q1 and Q2. Using such a control method, it is possible to cope with fluctuation in the input voltage Vin, and also cope with fluctuation in the load 23. However, it can be seen from Fig. 24 that by adjusting the inductance of the inductor Lr, a maximum gain of the resonance circuit is increased without changing the switching frequency. At a frequency f1, a gain exhibited with large inductance of the inductor Lr is higher than a gain exhibited with small inductance of the inductor Lr. On the other hand, at a frequency f2, a gain exhibited with small inductance of the inductor Lr is higher than a gain exhibited with large inductance of the inductor Lr. Accordingly, it is possible to widen ranges of the input voltage and the load, without significantly increasing or decreasing the switching frequency.

According to the transformer 10 of the embodiment of the present disclosure, the leakage inductance of the transformer 10 serves as the inductor Lr. Accordingly, according to the power converter apparatus of Fig. 23, it is possible to adjust the inductance of the resonance circuit without an additional inductor Lr. Since no additional inductor Lr is needed, it is possible to increase a power density of the power converter apparatus.

Since the power converter apparatus according to the present embodiment is provide with the transformer 10, it is possible to adjust magnetizing inductance and increase leakage inductance of the transformer 10, without increasing a loss of the transformer 10. In addition, it is possible to increase a gain of the power converter apparatus because of resonance of the leakage inductance of the transformer 10. Accordingly, according to the present embodiment, it is possible to achieve the power converter apparatus having a high power density.

The power converter apparatus according to the present embodiment may be provided with any of the transformers 10A to 10H according to other modified embodiments, instead of the transformer 10 of Fig. 1.

The embodiment of the present disclosure is not limited to the circuit as shown in Fig. 23, and other power converter apparatuses including a transformer may be provided.

The embodiment of the present disclosure is not limited to the power converter apparatus, and other electronic circuits including a transformer may be provided.

### [OTHER MODIFIED EMBODIMENTS]

Although the embodiments of the present disclosure have been described in detail above, the above descriptions are merely examples of the present disclosure in all respects. Needless to say, various improvements and modifications can be made without departing from the scope of the appended claims. For example, the following changes can be made. Hereinafter, components similar to those of the above embodiments are indicated by similar reference signs, and points similar to those of the above embodiments will be omitted as appropriate.

The above-described embodiments and modified embodiments may be combined in any manner.

The embodiments described herein are merely examples of the present disclosure in all respects. Needless to say, various improvements and modifications can be made without departing from the scope of the appended claims. That is, specific configurations corresponding to the embodiments may be appropriately adopted in implementing the present disclosure.

Although Fig. 1 and the other drawings show the rectangular main core, the present disclosure is not limited thereto. The main core may have a shape other than a rectangle, and for example, may have a ring shape.

Although Fig. 1 and the other drawings show the cases where the main core is constituted of the two main core parts, the present disclosure is not limited thereto. The main core may be constituted of three or more main core parts.

Although Fig. 1 and the other drawings show the cases where the windings 3a to 4b are wound in the two sections A1 and A2, the present disclosure is not limited thereto. The windings 3a to 4b may be wound around the main core in three or more sections of the loop of the main core, the sections being separated from each other, or may be wound around the main core in one section as shown in Fig. 16. In accordance with a number of sections around which the windings 3a to 4b are wound, three or more bypass cores may be provided, or one bypass core may be provided as shown in Fig. 16.

The shapes and the number of the bypass cores are not limited to those shown in Fig. 1, Figs. 17 to 22, and the like, and any other shapes and number of the bypass cores may be provided as long as the magnetic fluxes originate from the main core and return to the main core again through the bypass cores (that is, the magnetic fluxes passing through the bypass cores 2a and 2b occur).

### [SUMMARY OF EMBODIMENTS]

The transformer and the power converter apparatus according to various aspects of the present disclosure may be represented as follows.

A transformer (10, 10A to 10H) according to a first aspect of the present disclosure is provided with: a main core (1, 1A to 1C), a first winding (3a), a second winding (3b), at least one first bypass core (2a), a third winding (4a), at least one second bypass core (2b), a fourth winding (4b), and at least one gap (G). The main core (1, 1A to 1C) is shaped as a loop. The first winding (3a) is wound around the main core (1, 1A to 1C) in a first section (A1) of the loop of the main core (1, 1A to 1C). The second winding (3b) is wound around the main core (1, 1A to 1C) in a second section (A2) of the loop of the main core (1, 1A to 1C), the second section (A2) being separated from the first section (A1). The at least one first bypass core (2a) is provided along the first section (A1) of the main core (1, 1A to 1C) and outside the first winding (3a). The third winding (4a) is wound around the main core (1, 1A to 1C) and the first bypass core (2a) in the first section (A1) of the main core (1, 1A to 1C). The at least one second bypass core (2b) is provided along the second section (A2) of the main core (1, 1A to 1C) and outside the second winding (3b). The fourth winding (4b) is wound around the main core (1, 1A to 1C) and the second bypass core (2b) in the second section (A2) of the main core (1, 1A to 1C). The at least one gap (G) is formed in the main core (1, 1A to 1C) so as to intersect the loop of the main core (1, 1A to 1C), at a position separated from both the first and second sections (A1, A2) of the main core (1, 1A to 1C).

According to the transformer (10, 10A to 10H) of a second aspect of the present disclosure, the transformer of the first aspect is further configured as follows. The first bypass core (2a) extends over a length longer than a length of the first section (A1). In addition, the second bypass core (2b) extends over a length longer than a length of the second section (A2).

According to the transformer (10, 10A to 10H) of a third aspect of the present disclosure, the transformer of the second aspect is further configured as follows. The first and second bypass cores (2a, 2b) extend along the main core (1, 1A to 1C), and are bent toward the main core (1, 1A to 1C), or along the main core (1, 1A to 1C), at both ends of each of the first and second bypass cores (2a, 2b).

According to the transformer (10, 10A to 10H) of a fourth aspect of the present disclosure, the transformer of one of the first to third aspects is further configured as follows. The transformer is provided with a plurality of first bypass cores (2a1, 2a2; 2Ha1, 2Ha2) and a plurality of second bypass cores (2b1, 2b2; 2Hb1, 2Hb2).

According to the transformer (10, 10A to 10H) of a fifth aspect of the present disclosure, the transformer of the one of the first to fourth aspects is further configured as follows. The first and third windings (3a, 4a) are wound so as to contact a surface of the main core (1, 1A to 1C) at each of turns, and to be alternately arranged on the surface of the main core (1, 1A to 1C). In addition, the second and fourth windings (3b, 4b) are wound so as to contact the surface of the main core (1, 1A to 1C) at each of turns, and to be alternately arranged on the surface of the main core (1, 1A to 1C).

According to the transformer (10, 10A to 10H) of a sixth aspect of the present disclosure, the transformer of the one of the first to fifth aspects is further configured as follows. The transformer is provided with: at least one gap (G) formed in the main core (1, 1A to 1C) so as to intersect the loop of the main core (1, 1A to 1C), in a third section (A3) of the loop of the main core (1, 1A to 1C) between one end of the first section (A1) and one end of the second section (A2); and at least one gap (G) formed in the main core (1, 1A to 1C) so as to intersect the loop of the main core (1, 1A to 1C), in a fourth section (A4) of the loop of the main core (1, 1A to 1C) between another end of the first section (A1) and another end of the second section (A2).

According to the transformer (10, 10A to 10H) of a seventh aspect of the present disclosure, the transformer of the sixth aspect is further configured as follows. The transformer is provided with a plurality of gaps (G) formed in the main core (1, 1A to 1C) so as to intersect the loop of the main core (1, 1A to 1C), in at least one of the third and fourth sections (A3, A4).

According to the transformer (10, 10A to 10H) of an eighth aspect of the present disclosure, the transformer of the one of the first to seventh aspects is further configured as follows. The transformer is provided with first to fourth terminals. In addition, the first and second windings (3a, 3b) are connected in series between the first and second terminals, so that the first and second windings (3a, 3b) generate magnetic fluxes in an identical direction along the loop of the main core (1, 1A to 1C) when a current flows between the first and second terminals. In addition, the third and fourth windings (4a, 4b) are connected in series between the third and fourth terminals, so that the third and fourth windings (4a, 4b) generate magnetic fluxes in an identical direction along the loop of the main core (1, 1A to 1C) when a current flows between the third and fourth terminals.

According to the transformer (10, 10A to 10H) of a ninth aspect of the present disclosure, the transformer of the one of the first to seventh aspects is further configured as follows. The transformer is provided with first to fifth terminals. In addition, the first and second windings (3a, 3b) are connected in series between the first and second terminals, so that the first and second windings (3a, 3b) generate magnetic fluxes in an identical direction along the loop of the main core (1, 1A to 1C) when a current flows between the first and second terminals. In addition, the third winding (4a) is connected between the third and fifth terminals. In addition, the fourth winding (4b) is connected between the fourth and fifth terminals. In addition, the third and fourth windings (4a, 4b) are connected to each other, so that the third and fourth windings (4a, 4b) generate magnetic fluxes in an identical direction along the loop of the main core (1, 1A to 1C) when a current flows from the fifth terminal to each of the third and fourth terminals.

According to the transformer (10, 10A to 10H) of a tenth aspect of the present disclosure, the transformer of the one of the first to seventh aspects is further configured as follows. The transformer is provided with first to fifth terminals, In addition, the first winding (3a) is connected between the first and fifth terminals. In addition, the second winding (3b) is connected between the second and fifth terminals. In addition, the first and second windings (3a, 3b) are connected to each other, so that the first and second windings (3a, 3b) generate magnetic fluxes in an identical direction along the loop of the main core (1, 1A to 1C) when a current flows from the fifth terminal to each of the first and second terminals. In addition, the third and fourth windings (4a, 4b) are connected in series between the third and fourth terminals, so that the third and fourth windings (4a, 4b) generate magnetic fluxes in an identical direction along the loop of the main core (1, 1A to 1C) when a current flows between the third and fourth terminals.

A power converter apparatus according to an eleventh aspect of the present disclosure is provided with the transformer (10, 10A to 10H) according to one of the first to tenth aspects.

### INDUSTRIAL APPLICABILITY

The transformers according to the aspects of the present disclosure are applicable to, for example, a power converter apparatus having a high power density.

### REFERENCE SIGNS LIST

1, 1A to 1D: MAIN CORE
1a, 1b, 1Aa to 1Da, 1Ab to 1Db, 1Cc: MAIN CORE PART
2a, 2b, 2a1 to 2b2, 2Fa, 2Fb, 2Ga, 2Gb, 2Ha1 to 2Hb2: BYPASS CORE
3a, 3b, 4a, 4b: WINDING
5, 6: SPACER
10, 10A to 10H: TRANSFORMER
21: DC POWER SUPPLY
22: DRIVER CIRCUIT
23: LOAD
C1, C2: CAPACITOR
D1 to D8: DIODE
G: GAP
Q1, Q2: SWITCH ELEMENT

## Claims

1. A transformer (1, 1A to 1H) comprising:
a main core (1, 1A to 1C) shaped as a loop;
**characterized in that** the transformer (1, 1A to 1H) further comprises:
a first winding (3a) wound around the main core (1, 1A to 1C) in a first section (A1) of the loop of the main core (1, 1A to 1C);
a second winding (3b) wound around the main core (1, 1A to 1C) in a second section (A2) of the loop of the main core (1, 1A to 1C), the second section (A2) being separated from the first section (A1);
at least one first bypass core (2a) provided along the first section (A1) of the main core (1, 1A to 1C) and outside the first winding (3a);
a third winding (4a) wound around the main core (1, 1A to 1C) and the first bypass core (2a) in the first section (A1) of the main core (1, 1A to 1C);
at least one second bypass core (2b) provided along the second section (A2) of the main core (1, 1A to 1C) and outside the second winding (3b);
a fourth winding (4b) wound around the main core (1, 1A to 1C) and the (2b) in the second section (A2) of the main core (1, 1A to 1C); and
at least one gap (G) formed in the main core (1, 1A to 1C) so as to intersect the loop of the main core (1, 1A to 1C), at a position separated from both the first and second sections (A1, A2) of the main core (1, 1A to 1C).

2. The transformer (1, 1A to 1H) as claimed in claim 1,
wherein the first bypass core (2a) extends over a length longer than a length of the first section (A1), and
wherein the second bypass core (2b) extends over a length longer than a length of the second section (A2).

3. The transformer (1F to 1H) as claimed in claim 2,
wherein the first and second bypass cores (2Fa, 2Fb; 2Ga, 2Gb; 2Ha1 to 2Hb2) extend along the main core (1, 1A to 1C), and are bent toward the main core (1, 1A to 1C), or along the main core (1, 1A to 1C), at both ends of each of the first and second bypass cores (2Fa, 2Fb; 2Ga, 2Gb; 2Ha1 to 2Hb2).

4. The transformer (1E, 1H) as claimed in one of claims 1 to 3, comprising a plurality of first bypass cores (2a1, 2a2; 2Ha1, 2Ha2) and a plurality of second bypass cores (2b1, 2b2; 2Hb1, 2Hb2).

5. The transformer (1, 1A to 1H) as claimed in one of claims 1 to 4,
wherein the first and third windings (3a, 4a) are wound so as to contact a surface of the main core (1, 1A to 1C) at each of turns, and to be alternately arranged on the surface of the main core (1, 1A to 1C), and
wherein the second and fourth windings (3b, 4b) are wound so as to contact the surface of the main core (1, 1A to 1C) at each of turns, and to be alternately arranged on the surface of the main core (1, 1A to 1C).

6. The transformer (1, 1A to 1H) as claimed in one of claims 1 to 5, comprising:
at least one first gap (G) formed in the main core (1, 1A to 1C) so as to intersect the loop of the main core (1, 1A to 1C), in a third section (A3) of the loop of the main core (1, 1A to 1C) between one end of the first section (A1) and one end of the second section (A2); and
at least one second gap (G) formed in the main core (1, 1A to 1C) so as to intersect the loop of the main core (1, 1A to 1C), in a fourth section (A4) of the loop of the main core (1, 1A to 1C) between another end of the first section (A1) and another end of the second section (A2).

7. The transformer (1, 1A to 1H) as claimed in claim 6, comprising a plurality of gaps (G) formed in the main core (1, 1A to 1C) so as to intersect the loop of the main core (1, 1A to 1C), in at least one of the third and fourth sections (A3, A4).

8. The transformer (1, 1A to 1H) as claimed in one of claims 1 to 7, comprising first to fourth terminals,
wherein the first and second windings (3a, 3b) are connected in series between the first and second terminals, so that the first and second windings (3a, 3b) generate magnetic fluxes in an identical direction along the loop of the main core (1, 1A to 1C) when a current flows between the first and second terminals, and
wherein the third and fourth windings (4a,4b) are connected in series between the third and fourth terminals, so that the third and fourth windings (4a,4b) generate magnetic fluxes in an identical direction along the loop of the main core (1, 1A to 1C) when a current flows between the third and fourth terminals.

9. The transformer (1, 1A to 1H) as claimed in one of claims 1 to 7, comprising first to fifth terminals,
wherein the first and second windings (3a, 3b) are connected in series between the first and second terminals, so that the first and second windings (3a, 3b) generate magnetic fluxes in an identical direction along the loop of the main core (1, 1A to 1C) when a current flows between the first and second terminals,
wherein the third winding (4a) is connected between the third and fifth terminals,
wherein the fourth winding (4b) is connected between the fourth and fifth terminals, and
wherein the third and fourth windings (4a,4b) are connected to each other, so that the third and fourth windings (4a,4b) generate magnetic fluxes in an identical direction along the loop of the main core (1, 1A to 1C) when a current flows from the fifth terminal to each of the third and fourth terminals.

10. The transformer (1, 1A to 1H) as claimed in one of claims 1 to 7, comprising first to fifth terminals,
wherein the first winding (3a) is connected between the first and fifth terminals,
wherein the second winding (3b) is connected between the second and fifth terminals,
wherein the first and second windings (3a, 3b) are connected to each other, so that the first and second windings (3a, 3b) generate magnetic fluxes in an identical direction along the loop of the main core (1, 1A to 1C) when a current flows from the fifth terminal to each of the first and second terminals, and
wherein the third and fourth windings (4a,4b) are connected in series between the third and fourth terminals, so that the third and fourth windings (4a,4b) generate magnetic fluxes in an identical direction along the loop of the main core (1, 1A to 1C) when a current flows between the third and fourth terminals.

11. A power converter apparatus comprising the transformer (1, 1A to 1H) as claimed in one of claims 1 to 10.

## Patentansprüche

1. Transformator (1, 1A bis 1H), umfassend:
einen Hauptkern (1, 1A bis 1C), der als Schleife geformt ist;
**dadurch gekennzeichnet, dass** der Transformator (1, 1A bis 1H) ferner Folgendes umfasst:
eine erste Wicklung (3a), die in einem ersten Abschnitt (A1) der Schleife des Hauptkerns (1, 1A bis 1C) um den Hauptkern (1, 1A bis 1C) gewickelt ist;
eine zweite Wicklung (3b), die in einem zweiten Abschnitt (A2) der Schleife des Hauptkerns (1, 1A bis 1C) um den Hauptkern (1, 1A bis 1C) gewickelt ist, wobei der zweite Abschnitt (A2) von dem ersten Abschnitt (A1) getrennt ist;
mindestens einen ersten Bypass-Kern (2a), der entlang des ersten Abschnitts (A1) des Hauptkerns (1, 1A bis 1C) und außerhalb der ersten Wicklung (3a) bereitgestellt ist;
eine dritte Wicklung (4a), die in dem ersten Abschnitt (A1) des Hauptkerns (1, 1A bis 1C) um den Hauptkern (1, 1A bis 1C) und den ersten Bypass-Kern (2a) gewickelt ist;
mindestens einen zweiten Bypass-Kern (2b), der entlang des zweiten Abschnitts (A2) des Hauptkerns (1, 1A bis 1C) und außerhalb der zweiten Wicklung (3b) bereitgestellt ist;
eine vierte Wicklung (4b), die in dem zweiten Abschnitt (A2) des Hauptkerns (1, 1A bis 1C) um den Hauptkern (1, 1A bis 1C) und den (2b) gewickelt ist; und
mindestens eine Lücke (G), die in dem Hauptkern (1, 1A bis 1C) gebildet ist, um die Schleife des Hauptkerns (1, 1A bis 1C) an einer Position zu schneiden, die von sowohl dem ersten als auch dem zweiten Abschnitt (A1, A2) des Hauptkerns (1, 1A bis 1C) getrennt ist.

2. Transformator (1, 1A bis 1H) nach Anspruch 1,
wobei sich der erste Bypass-Kern (2a) über eine Länge erstreckt, die länger ist als eine Länge des ersten Abschnitts (A1), und
wobei sich der zweite Bypass-Kern (2b) über eine Länge erstreckt, die länger ist als eine Länge des zweiten Abschnitts (A2).

3. Transformator (1F bis 1H) nach Anspruch 2,
wobei sich der erste und der zweite Bypass-Kern (2Fa, 2Fb; 2Ga, 2Gb; 2Ha1 bis 2Hb2) entlang des Hauptkerns (1, 1A bis 1C) erstrecken und in Richtung des Hauptkerns (1, 1A bis 1C) gebogen sind oder entlang des Hauptkerns (1, 1A bis 1C), an beiden Enden von jedem von dem ersten und dem zweiten Bypass-Kern (2Fa, 2Fb; 2Ga, 2Gb; 2Ha1 bis 2Hb2).

4. Transformator (1E, 1H) nach einem der Ansprüche 1 bis 3, umfassend eine Vielzahl von ersten Bypass-Kernen (2a1, 2a2; 2Ha1, 2Ha2) und eine Vielzahl von zweiten Bypass-Kernen (2b 1, 2b2; 2Hb1, 2Hb2).

5. Transformator (1, 1A bis 1H) nach einem der Ansprüche 1 bis 4, wobei die erste und die dritte Wicklung (3a, 4a) gewickelt sind, um bei jeder der Windungen eine Oberfläche des Hauptkerns (1, 1A bis 1C) zu berühren, und um abwechselnd auf der Oberfläche des Hauptkerns (1, 1A bis 1C) angeordnet zu sein, und
wobei die zweite und die vierte Wicklung (3b, 4b) gewickelt sind, um die Oberfläche des Hauptkerns (1, 1A bis 1C) bei jeder der Windungen zu berühren und um abwechselnd auf der Oberfläche des Hauptkerns (1, 1A bis 1C) angeordnet zu sein.

6. Transformator (1, 1A bis 1H) nach einem der Ansprüche 1 bis 5, umfassend:
mindestens eine erste Lücke (G), die in dem Hauptkern (1, 1A bis 1C) gebildet ist, um die Schleife des Hauptkerns (1, 1A bis 1C) in einem dritten Abschnitt (A3) der Schleife des Hauptkerns (1, 1A bis 1C) zwischen einem Ende des ersten Abschnitts (A1) und einem Ende des zweiten Abschnitts (A2) zu schneiden; und
mindestens eine zweite Lücke (G), die in dem Hauptkern (1, 1A bis 1C) gebildet ist, um die Schleife des Hauptkerns (1, 1A bis 1C) in einem vierten Abschnitt (A4) der Schleife des Hauptkerns (1, 1A bis 1C) zwischen einem anderen Ende des ersten Abschnitts (A1) und einem anderen Ende des zweiten Abschnitts (A2) zu schneiden.

7. Transformator (1, 1A bis 1H) nach Anspruch 6, umfassend eine Vielzahl von Lücken (G), die in dem Hauptkern (1, 1A bis 1C) gebildet sind, um die Schleife des Hauptkerns (1, 1A bis 1C) in mindestens einem von dem dritten und dem vierten Abschnitt (A3, A4) zu schneiden.

8. Transformator (1, 1A bis 1H) nach einem der Ansprüche 1 bis 7, umfassend einen ersten bis vierten Anschluss,
wobei die erste und die zweite Wicklung (3a, 3b) zwischen dem ersten und dem zweiten Anschluss in Reihe geschaltet sind, sodass die erste und die zweite Wicklung (3a, 3b) magnetische Flüsse in einer gleichen Richtung entlang der Schleife des Hauptkerns (1, 1A bis 1C) zu erzeugen, wenn ein Strom zwischen dem ersten und dem zweiten Anschluss fließt, und
wobei die dritte und die vierte Wicklung (4a, 4b) zwischen dem dritten und dem vierten Anschluss in Reihe geschaltet sind, sodass die dritte und die vierte Wicklung (4a, 4b) magnetische Flüsse in einer gleichen Richtung entlang der Schleife des Hauptkerns (1, 1A bis 1C) erzeugen, wenn ein Strom zwischen dem dritten und dem vierten Anschluss fließt.

9. Transformator (1, 1A bis 1H) nach einem der Ansprüche 1 bis 7, umfassend einen ersten bis fünften Anschluss,
wobei die erste und die zweite Wicklung (3a, 3b) zwischen dem ersten und dem zweiten Anschluss in Reihe geschaltet sind, sodass die erste und die zweite Wicklung (3a, 3b) magnetische Flüsse in einer gleichen Richtung entlang der Schleife des Hauptkerns (1, 1A bis 1C) erzeugen, wenn ein Strom zwischen dem ersten und dem zweiten Anschluss fließt,
wobei die dritte Wicklung (4a) zwischen den dritten und fünften Anschluss geschaltet ist,
wobei die vierte Wicklung (4b) zwischen den vierten und fünften Anschluss geschaltet ist, und
wobei die dritte und die vierte Wicklung (4a, 4b) miteinander verbunden sind, sodass die dritte und die vierte Wicklung (4a, 4b) magnetische Flüsse in einer gleichen Richtung entlang der Schleife des Hauptkerns (1, 1A bis 1C) erzeugen, wenn ein Strom von dem fünften Anschluss zu jedem von dem dritten und dem vierten Anschlüsse fließt.

10. Transformator (1, 1A bis 1H) nach einem der Ansprüche 1 bis 7, umfassend einen ersten bis fünften Anschluss,
wobei die erste Wicklung (3a) zwischen den ersten und fünften Anschluss geschaltet ist,
wobei die zweite Wicklung (3b) zwischen den zweiten und fünften Anschluss geschaltet ist,
wobei die erste und die zweite Wicklung (3a, 3b) miteinander verbunden sind, sodass die erste und die zweite Wicklung (3a, 3b) magnetische Flüsse in einer gleichen Richtung entlang der Schleife des Hauptkerns (1, 1A bis 1C) erzeugen, wenn ein Strom von dem fünften Anschluss zu jedem von dem ersten und dem zweiten Anschluss fließt, und
wobei die dritte und die vierte Wicklung (4a, 4b) zwischen dem dritten und dem vierten Anschluss in Reihe geschaltet sind, sodass die dritte und die vierte Wicklung (4a, 4b) magnetische Flüsse in einer gleichen Richtung entlang der Schleife des Hauptkerns (1, 1A bis 1C) erzeugen, wenn ein Strom zwischen dem dritten und dem vierten Anschluss fließt.

11. Stromwandlervorrichtung, umfassend den Transformator (1, 1A bis 1H) nach einem der Ansprüche 1 bis 10.

## Revendications

1. Transformateur (1, 1A à 1H) comprenant :
un noyau principal (1, 1A à 1C) façonné en forme de boucle ;
**caractérisé en ce que** le transformateur (1, 1A à 1H) comprend en outre :
un premier enroulement (3a) enroulé autour du noyau principal (1, 1A à 1C) dans une première section (A1) de la boucle du noyau principal (1, 1A à 1C) ;
un deuxième enroulement (3b) enroulé autour du noyau principal (1, 1A à 1C) dans une deuxième section (A2) de la boucle du noyau principal (1, 1A à 1C), la deuxième section (A2) étant séparée de la première section (A1) ;
au moins un premier noyau de dérivation (2a) pourvu le long de la première section (A1) du noyau principal (1, 1A à 1C) et à l'extérieur du premier enroulement (3a) ;
un troisième enroulement (4a) enroulé autour du noyau principal (1, 1A à 1C) et du premier noyau de dérivation (2a) dans la première section (A1) du noyau principal (1, 1A à 1C) ;
au moins un second noyau de dérivation (2b) pourvu le long de la deuxième section (A2) du noyau principal (1, 1A à 1C) et à l'extérieur du deuxième enroulement (3b) ;
un quatrième enroulement (4b) enroulé autour du noyau principal (1, 1A à 1C) et du (2b) dans la deuxième section (A2) du noyau principal (1, 1A à 1C) ; et
au moins un entrefer (G) formé dans le noyau principal (1, 1A à 1C) de manière à croiser la boucle du noyau principal (1, 1A à 1C), au niveau d'une position séparée à la fois des première et seconde sections (A1, A2) du noyau principal (1, 1A à 1C).

2. Transformateur (1, 1A à 1H) selon la revendication 1,
ledit premier noyau de dérivation (2a) s'étendant sur une longueur supérieure à la longueur de la première section (A1), et
ledit second noyau de dérivation (2b) s'étendant sur une longueur supérieure à la longueur de la deuxième section (A2).

3. Transformateur (1F à 1H) selon la revendication 2,
lesdits premier et second noyaux de dérivation (2Fa, 2Fb ; 2Ga, 2Gb ; 2Ha1 à 2Hb2) s'étendant le long du noyau principal (1, 1A à 1C), et étant courbés en direction du noyau principal (1, 1A à 1C), ou le long du noyau principal (1, 1A à 1C), au niveau des deux extrémités de chacun des premier et second noyaux de dérivation (2Fa, 2Fb ; 2Ga, 2Gb ; 2Ha1 à 2Hb2).

4. Transformateur (1E, 1H) selon l'une des revendications 1 à 3, comprenant une pluralité de premiers noyaux de dérivation (2a1, 2a2 ; 2Ha1, 2Ha2) et une pluralité de seconds noyaux de dérivation (2b1, 2b2 ; 2Hb1, 2Hb2).

5. Transformateur (1, 1A à 1H) selon l'une des revendications 1 à 4,
lesdits premier et troisième enroulements (3a, 4a) étant enroulés de manière à être en contact avec une surface du noyau principal (1, 1A à 1C) au niveau de chacune des spires, et à être disposés en alternance sur la surface du noyau principal (1, 1A à 1C), et
lesdits deuxième et quatrième enroulements (3b, 4b) étant enroulés de manière à être en contact avec la surface du noyau principal (1, 1A à 1C) au niveau de chacune des spires, et à être disposés en alternance sur la surface du noyau principal (1, 1A à 1C).

6. Transformateur (1, 1A à 1H) selon l'une des revendications 1 à 5, comprenant :
au moins un premier entrefer (G) formé dans le noyau principal (1, 1A à 1C) de manière à croiser la boucle du noyau principal (1, 1A à 1C), dans une troisième section (A3) de la boucle du noyau principal (1, 1A à 1C) entre une extrémité de la première section (A1) et une extrémité de la deuxième section (A2) ; et
au moins un second entrefer (G) formé dans le noyau principal (1, 1A à 1C) de manière à croiser la boucle du noyau principal (1, 1A à 1C), dans une quatrième section (A4) de la boucle du noyau principal (1, 1A à 1C) entre une autre extrémité de la première section (A1) et une autre extrémité de la deuxième section (A2).

7. Transformateur (1, 1A à 1H) selon la revendication 6, comprenant une pluralité d'entrefers (G) formés dans le noyau principal (1, 1A à 1C) de manière à croiser la boucle du noyau principal (1, 1A à 1C), dans au moins l'une des troisième et quatrième sections (A3, A4).

8. Transformateur (1, 1A à 1H) selon l'une des revendications 1 à 7, comprenant une première à une quatrième borne,
lesdits premier et deuxième enroulements (3a, 3b) étant branchés en série entre les première et deuxième bornes, de sorte que les premier et deuxième enroulements (3a, 3b) génèrent des flux magnétiques dans une direction identique le long de la boucle du noyau principal (1, 1A à 1C) lorsqu'un courant circule entre les première et deuxième bornes, et
lesdits troisième et quatrième enroulements (4a, 4b) étant branchés en série entre les troisième et quatrième bornes, de sorte que les troisième et quatrième enroulements (4a, 4b) génèrent des flux magnétiques dans une direction identique le long de la boucle du noyau principal (1, 1A à 1C) lorsqu'un courant circule entre les troisième et quatrième bornes.

9. Transformateur (1, 1A à 1H) selon l'une des revendications 1 à 7, comprenant une première à une cinquième borne,
lesdits premier et deuxième enroulements (3a, 3b) étant branchés en série entre les première et deuxième bornes, de sorte que les premier et deuxième enroulements (3a, 3b) génèrent des flux magnétiques dans une direction identique le long de la boucle du noyau principal (1, 1A à 1C) lorsqu'un courant circule entre les première et deuxième bornes,
ledit troisième enroulement (4a) étant branché entre les troisième et cinquième bornes,
ledit quatrième enroulement (4b) étant branché entre les quatrième et cinquième bornes, et
lesdits troisième et quatrième enroulements (4a, 4b) étant branchés l'un à l'autre, de sorte que les troisième et quatrième enroulements (4a, 4b) génèrent des flux magnétiques dans une direction identique le long de la boucle du noyau principal (1, 1A à 1C) lorsqu'un courant circule de la cinquième borne à chacune des troisième et quatrième bornes.

10. Transformateur (1, 1A à 1H) selon l'une des revendications 1 à 7, comprenant une première à une cinquième borne,
ledit premier enroulement (3a) étant branché entre les première et cinquième bornes,
ledit deuxième enroulement (3b) étant branché entre les deuxième et cinquième bornes,
lesdits premier et deuxième enroulements (3a, 3b) étant branchés l'un à l'autre, de sorte que les premier et deuxième enroulements (3a, 3b) génèrent des flux magnétiques dans une direction identique le long de la boucle du noyau principal (1, 1A à 1C) lorsqu'un courant circule de la cinquième borne à chacune des première et deuxième bornes, et
lesdits troisième et quatrième enroulements (4a, 4b) étant branchés en série entre les troisième et quatrième bornes, de sorte que les troisième et quatrième enroulements (4a, 4b) génèrent des flux magnétiques dans une direction identique le long de la boucle du noyau principal (1, 1A à 1C) lorsqu'un courant circule entre les troisième et quatrième bornes.

11. Appareil convertisseur de puissance comprenant le transformateur (1, 1A à 1H) selon l'une des revendications 1 à 10.
